(19) Europäisches Patentamt
European Patent Office
Office européen des brevets

(11) EP 1 752 976 A2

(12) **EUROPEAN PATENT APPLICATION**

(43) Date of publication:
**14.02.2007 Bulletin 2007/07**

(51) Int Cl.:
***G11B 7/007*** *(2006.01)*

(21) Application number: **06118318.2**

(22) Date of filing: **02.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **12.08.2005 JP 2005234692**

(71) Applicant: **KABUSHIKI KAISHA TOSHIBA**
**Tokyo 105-8001 (JP)**

(72) Inventors:
- **Ogawa, Akihito**
  **Tokyo**
  **105-8001 (JP)**
- **Watabe, Kazuo**
  **Tokyo**
  **105-8001 (JP)**
- **Kashihara, Yutaka**
  **Tokyo**
  **105-8001 (JP)**

(74) Representative: **Henkel, Feiler & Hänzel**
**Patentanwälte**
**Maximiliansplatz 21**
**80333 München (DE)**

(54) **Information recording medium, information recording device, and information recording method**

(57) According to one embodiment, a single-sided multilayered information recording medium having recording layers, wherein an emboss management zone, an inner recordable management zone, a data area, and an cuter recordable management zone are sequentially arranged from an inner side of each of the recording layers, and a burst-cutting area is arranged inward of the emboss management zone in any one of the recording layers.

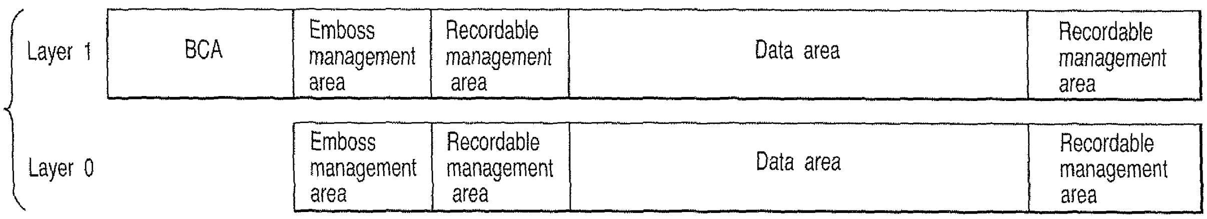


FIG.7A

EP 1 752 976 A2

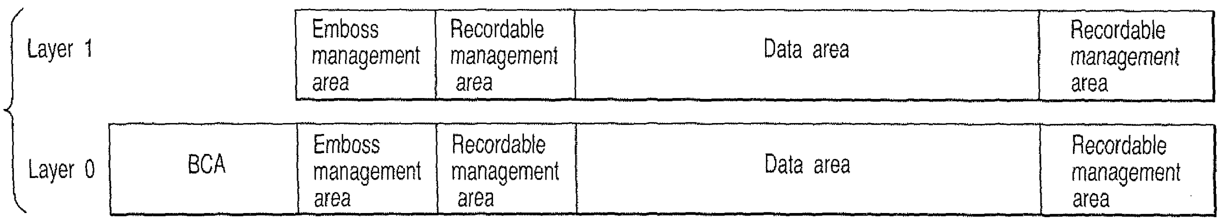
Layer 1
Emboss management area
Recordable management area
Data area
Recordable management area
Layer 0
BCA
Emboss management area
Recordable management area
Data area
Recordable management area

FIG.7B

## Description

One embodiment of the invention relates to an information recording medium having a plurality of recording layers formed on one side, an information recording device using the information recording medium, and an information recording method.

As a recording medium on which a large amount of information such as a video signal can be recorded, a DVD (digital versatile disc) is popularized. A movie having a length of about two hours is recorded on a DVD, and the information is reproduced by a reproducing device to make it possible to freely watch a movie at home. In recent years, digitalization of television broadcast is proposed, and practical realization of a high-resolution television system called a high-definition television (HDTV) system is planed. For this reason, a standard of a next-generation DVD the beam spot of which is narrowed by shortening the wavelength of a laser beam or increasing a numerical aperture (NA) to increase the recording capacity is proposed. In addition to the method of narrowing a beam spot, a method of using the following single-sided multilayered recording medium is considered (for example, see Japanese Patent Application KOKAI Publication No. 2004-206849 (paragraphs 0036 to 0041, FIG. 1)). That is, a plurality of recording layers (for example, two layers) are formed on one side of a disc, an objective lens is moved in an optical-axis direction to converge a beam to the respective layers to make it possible to record or reproduced on/from the respective recording layers.

In a recordable recording medium, management data must be recorded every additional recording of data. Recordable management zones required to additionally record the management data are formed on an inner circumference portion and an outer circumference portion of the data area. In a current DVD, the recordable management zone on the inner circumference portion is arranged inside an emboss area.

However, if the recordable areas are arranged on both the sides of the emboss area (i.e., on both the sides of the emboss area), the emboss area adversely affects the characteristics of a recording film; therefore, it is not preferred.

Such a conventional single-sided multilayered recordable information recording medium has the following problem. That is, a positional relationship between an emboss area and recordable management data recording areas adversely affects the characteristics of a recording film.

It is an object of the present invention to provide a recordable recording medium the recording capacity of which can be increased without adversely affecting characteristics of a recording film, an information recording device and an information recording method which use the information recording medium.

According to an embodiment of the present invention, a single-sided multilayered information recording medium having recording layers, wherein
an emboss management zone, an inner recordable management zone, a data area, and an outer recordable management zone are sequentially arranged from an inner side of each of the recording layers, and
a burst-cutting area is arranged inward of the emboss management zone in any one of the recording layers.

According to another embodiment of the present invention, an information recording device which records information on a single-sided multilayered information recording medium wherein an emboss management zone, an inner recordable management zone, a data area, and an outer recordable management zone are sequentially arranged from an inner side of each of the recording layers, a burst-cutting area is arranged inward of the emboss management zone in any one of the recording layers, each layer includes at least one of a test zone, a management zone, and a guard zone in at least one of the inner recordable management zone and the inner recordable management zone, and the test zone and the management zone of one of the recording layers overlap the guard zone of another one of the recording layers, the device comprising:

a dummy data recording unit which records dummy data to prevent an interlayer crosstalk in the guard zone;
a test unit which performs test writing in the test zone to optimize a recording waveform;
a data recording unit which records data in the data area; and
a management data recording unit which records management data in the management zone to manage a state of data which is being recorded in the data area.

According to still another embodiment of the present invention, an information recording method which records information on a single-sided multilayered information recording medium wherein an emboss management zone, an inner recordable management zone, a data area, and an outer recordable management zone are sequentially arranged from an inner side of each of the recording layers, a burst-cutting area is arranged inward of the emboss management zone in any one of the recording layers, each layer includes at least one of a test zone, a management zone, and a guard zone in at least one of the inner recordable management zone and the inner recordable management zone, and the test zone and the management zone of one of the recording layers overlap the guard zone of another one of the recording layers, the method comprising:

recording dummy data to prevent an interlayer crosstalk in the guard zone;

performing test writing in the test zone to optimize a recording waveform;
recording data in the data area; and
recording management data in the management zone to manage a state of data which is being recorded in the data area.

According to still another embodiment of the present invention, an information reproducing device which reproduces information from a single-sided multilayered information recording medium wherein an emboss management zone, an inner recordable management zone, a data area, and an outer recordable management zone are sequentially arranged from an inner side of each of the recording layers, a burst-cutting area is arranged inward of the emboss management zone in any one of the recording layers, each layer includes at least one of a test zone, a management zone, and a guard zone in at least one of the inner recordable management zone and the inner recordable management zone, and the test zone and the management zone of one of the recording layers overlap the guard zone of another one of the recording layers, the device comprising:

a data access method switching unit;
a determining unit which determines a recording state of the recording layers; and
a control unit which causes the data access method switching unit to switch data access method depending on a determination result of the determining unit.

According to still another embodiment of the present invention, an information reproducing method which reproduces information from a single-sided multilayered information recording medium wherein an emboss management zone, an inner recordable management zone, a data area, and an outer recordable management zone are sequentially arranged from an inner side of each of the recording layers, a burst-cutting area is arranged inward of the emboss management zone in any one of the recording layers, each layer includes at least one of a test zone, a management zone, and a guard zone in at least one of the inner recordable management zone and the inner recordable management zone, and the test zone and the management zone of one of the recording layers overlap the guard zone of another one of the recording layers, the method comprising:

a data access method switching step;
a determining step for determining a recording state of the recording layers; and
a control step for causing the data access method switching step to switch data access method depending on a determination result of the determining step.

The invention can be more fully understood from the following detailed description when taken in conjunction with the accompanying drawings, in which:

FIG. 1 is an exemplary block diagram of an information recording/reproducing system according to an embodiment of the present invention;
FIG. 2 is an exemplary block diagram of an information recording/reproducing system according to another embodiment of the present invention;
FIG. 3 is an exemplary block diagram of an optical disc device according to still another embodiment of the present invention;
FIG. 4 is an exemplary pattern diagram of a dual-layer optical disc having two information recording/reproducing layers according a still further embodiment of the present invention;
FIG. 5 is an exemplary diagram showing physical specifications of an emboss area and a rewritable recording area of an optical disc of the embodiment of the present invention;
FIG. 6 is an exemplary diagram showing a sectional structure of each layer of the optical disc;
FIGS. 7A and 7B are exemplary diagrams showing layouts of respective layers of the optical disc;
FIGS. 8A and 8B are exemplary diagrams for explaining an interlayer crosstalk of the optical disc;
FIG. 9 is an exemplary graph showing a change in optimum value of a recording power of Layer 1 depending on a recording state of Layer 0;
FIG. 10 is an exemplary diagram showing a clearance set in a data area to prevent a signal offset caused by the interlayer crosstalk;
FIG. 11 is an exemplary diagram showing details of a layout on an inner circumference portion of the optical disc;
FIG. 12 is an exemplary diagram showing details of a layout on an outer circumference portion of the optical disc;
FIG. 13 is an exemplary diagram showing an example of information recorded in a BCA area;
FIG. 14 is a BCA record format of a disc;
FIG. 15 is an exemplary diagram showing details of a book type and a disc type of the BCA record;

FIG. 16 is an exemplary diagram showing details of an extended disc type of the BCA record;
FIG. 17 is an exemplary diagram showing details of other examples of the book type and the disc type of the BCA record;
FIG. 18 exemplary shows contents of physical format information of an emboss area formed on Layer 0;
FIG. 19 exemplary shows detailed contents of a data area allocation;
FIG. 20 exemplary shows physical format information of a recordable management zone;
FIG. 21 exemplary shows contents of a data area allocation in the physical format information in the recordable management zone;
FIG. 22 exemplary shows details of a start physical sector number of a border zone in the physical format information in the recordable management zone;
FIG. 23 is an exemplary diagram showing details of management zone;
FIG. 24 exemplary shows contents of unique ID field;
FIG. 25 exemplary shows a configuration of recording management data;
FIG. 26 exemplary shows RMD information of field 0;
FIG. 27 is an exemplary shows details of a disc state in the recording management data;
FIG. 28 exemplary shows details of a data area allocation in the recording management data;
FIG. 29 exemplary shows contents of a renewed data area allocation;
FIG. 30 exemplary shows contents of a drive test zone allocation;
FIGS. 31A and 31B exemplary show RMD information of field 1;
FIG. 32 exemplary shows RMD information of field 3;
FIG. 33A exemplary shows RMD information of field 4;
FIG. 33B exemplary shows RMD information of fields 5, 6, ..., 21;
FIGS. 34A, 34B, 34C, 34D, 34E, and 34F are exemplary diagrams showing recording states of data areas;
FIG. 35A is an exemplary diagram showing configurations of boarder-out and boarder-in areas;
FIG. 35B is an exemplary diagram showing a size of a boarder-out area;
FIG. 36 is an exemplary diagram showing a range of an inner circumference portion on which a signal is recorded in formatting;
FIG. 37 is an exemplary diagram showing a range of an inner circumference portion on which a signal is recorded in formatting;
FIG. 38 is an exemplary diagram showing changes of areas when recordable maximum physical sector numbers of Layer 0 are changed, in a case in which a guard zone is shifted;
FIG. 39 is an exemplary diagram showing changes of areas when recordable maximum physical sector numbers of Layer 0 are changed, in a case in which a new guard zone is generated;
FIG. 40 exemplary shows a size of a typical guard zone;
FIGS. 41A and 41B are exemplary diagrams showing procedures of recording example 1;
FIGS. 42A and 42B are exemplary diagrams showing procedures of recording example 2;
FIGS. 43A and 43B are exemplary diagrams showing procedures of recording example 3;
FIGS. 44A and 44B are exemplary diagrams showing a relationship between ranges of an open R zone and a recordable area of Layer 0 to explain recording inhibition;
FIG. 45 exemplary shows the number of sectors "A" required to assure a clearance;
FIG. 46 is an exemplary diagram showing a procedure of recording example 4;
FIGS. 47A, 47B, and 47C are exemplary diagrams showing states of discs finalized without data on Layer 1;
FIGS. 48A and 48B are exemplary diagrams showing states of discs finalized with data on Layer 1;
FIG. 49 is an exemplary diagram for explaining extension of a recording management zone in a border-in area;
FIG. 50 is an exemplary diagram for explaining extension of a recording management zone on an outer circumference portion;
FIG. 51 is an exemplary diagram showing a detailed layout on an inner circumference portion of an optical disc according to another embodiment;
FIG. 52 is an exemplary diagram showing a detailed layout on an inner circumference portion of an optical disc according to still another embodiment;
FIG. 53 is an exemplary diagram showing a detailed layout on an outer circumference portion of an optical disc according to a still further embodiment;
FIG. 54 is an exemplary diagram showing a configuration of an optical disc player according to another embodiment of the present invention; and
FIGS. 55A and 55B are exemplary diagrams for explaining a playback operation performed by the player according to the present embodiment in FIG. 54.

Various embodiments according to the invention will be described hereinafter with reference to the accompanying drawings. In general, according to one embodiment of the invention, a single-sided multilayered information recording medium having recording layers, wherein an emboss management zone, an inner recordable management zone, a data area, and an outer recordable management zone are sequentially arranged from an inner side of each of the recording layers, and a burst-cutting area is arranged inward of the emboss management zone in any one of the recording layers.

(Optical Disk Recording/Reproducing System)

FIGS. 1 and 2 are block diagrams of an information recording/reproducing system according to the embodiments of the present invention.

An information recording/reproducing system shown in FIG. 1, includes an optical disc 10 serving as a medium to record and reproduce information such as video data and user data, an optical disc device 12 which records information on the optical disc 10 or reproduces the information from the optical disc 10, and a host device 14 which issues a command to the optical disc device 12, reads necessary information from the optical disc 10 through the optical disc device 12, and performs reproduction of vide data, display of information for a user, and the like.

A device 16 such as an optical disc recorder or an optical disc player, as shown in FIG. 1, incorporates the optical disc device 12 and the host device 14 therein. The host device 14 includes a central processing unit (CPU), a random access memory (RAM) used as a work area, and a nonvolatile memory such as an electrically erasable and programmable ROM (EEPROM) or a flash memory which stores and holds setting parameters and various data to be held even though a power source is turned off. On these memories, various programs executed upon a request from a user, data required for processing, a file system required for file management, and the like are recorded. For example, a UDF bridge file system of a DVD video format, a UDF file system of a DVD video recording format, a UDF file system of a next-generation video format, a UDF file system of a next-generation video recording format, application software, and the like are stored.

On the other hand, a system such as a personal computer or the like, as shown in FIG. 2, serves as a host PC 18. Issuance of a designation to the optical disc device 12 is performed by executing an operation software (OS) or application software such as writing software or video playback software.

(Optical Disk Device)

FIG. 3 is an exemplary block diagram of an optical disc device according to the embodiments of the present invention. The optical disc device focuses a laser beam emitted from an optical head (pickup head: PUH) actuator 22 on an information recording layer of the optical disc 10 to record or reproduce the information. The beam reflected by the optical disc 10 passes through the optical system of the PUH actuator 22 again and is detected as an electric signal by a photodetector (PD) 24. The detected electric signal is amplified by a preamplifier 26 and output to a servo circuit 28, an RF signal processing circuit 30, and an address signal processing circuit 32. In the servo circuit 28, servo signals for focusing, tracking, tilt, and the like, and the signals are output to the PUH actuator (focus, tracking, or tilt actuator) 22. As a method of reading recorded data and a method of demodulating an address signal or the like at this time in the RF signal processing circuit 30 and the address signal processing circuit 32, a slice method and partial response maximum likelihood (PRML) method are known. In the optical disc device, an optimum demodulating method is selected depending on a size of a focusing beam spot formed by the optical disc 10 to be recorded or reproduced and the PUH actuator 22. As slice methods, a method of performing linear waveform equalization to a reproduced signal and then binarizing the signal, a method of causing a non-linear equalizer called a limit equalizer which limits a low-frequency high amplitude component of a reproduced signal to a constant value to equalize the low-frequency high amplitude component and then binarizing the signal, and the like are known. With respect to the PRML method, in accordance with a frequency characteristics of a reproduced signal, an optimum PR class, for example, PR (1,2,2,21), PR (1,2,1), PR (1,2,2,1), PR (3,4,4,3), and the like are selected.

In the address signal processing circuit 32, a detected signal is processed to read physical address information representing a recording position on an optical disc, and the physical address information is output to a controller 34. The controller 34, based on the address information, reads data such as user data of a desired position or records the data at a desired position. At this time, the data is modulated by a recording signal processing circuit 36 into a recording waveform control signal suitable for optical disc recording. Based on the signal, an LD drive circuit (LDD) 38 causes a laser diode (LD) in the PUH actuator 22 to emit light and records information on the optical disc 10.

In the present embodiment, a wavelength of the laser diode is 405 $\pm$ 15 nm. An NA of an objective lens used to focus the light of the above wavelength on the optical disc in the optical head 22 is 0.65. As an intensity distribution of incident light immediately before the light is incident on the objective lens, a relative intensity at a periphery (aperture boundary position) of the objective lens when a center intensity is set at "1" is called "RIM Intensity". A value of the RIM Intensity in an HD DVD format is set within a range of 55 to 70%. An amount of wavefront aberration in the optical head 22 at this time is optically designed to be up to 0.33 λ (0.33 λ or less) with respect to a wavelength λ.

(Optical Disk)

FIG. 4 is a diagram of a dual-layer optical disc having two information recording/reproducing layers according to the embodiments of the present invention. The disc has two information recording layers (to be referred to as layers hereinafter) as shown in FIG. 4, and the layouts of information areas of the layers are slightly different from each other. As discs used in the embodiments, a write-once type optical disc on which a recording mark can be written at one position only once and a rewritable type optical disc on which a recording mark can be overwritten or erased.

(Format of Optical Disk)

FIG. 5 shows physical specifications of an emboss area and a rewritable recording area on an optical disc according to the embodiments of the present invention. CLV in a rotation control method is an abbreviation of a constant linear velocity and means a rotation control method which keeps a linear velocity constant. Eight to twelve modulation (ETM) is one of modulation methods. In this method, each 8 information bits are converted into 12 channel bits with redundancy to record a signal. By giving the redundancy, information recording/reproducing reliability is considerably improved in comparison with a case in which information bits are directly recorded on an optical disc.

A reflectance of a disc according to the present embodiment will be described below. On the disc, when observation is performed at a wavelength of 405 nm, maximum reflectances of emboss areas of Layer 0 and Layer 1 and a maximum reflectance of a recording signal after recording falls within a range of 3% to 9%. On the respective layers of the optical disc, unevenness serving as a guide groove for recording/reproducing information is formed as shown in FIG. 6. Front portion of the guide groove, seen from the side from which light is incident, is called a groove, and rear portion of the guide groove is called a land. Disks include a disc on which recording is performed in only a groove track, a disc on which recording is performed in only a land track, and a disc on which recording is performed in both a groove track and a land track. Furthermore, the guide groove wobbles in a sine-wave shape in a radial direction. The phases of the sine wave are switched to record physical address information representing a physical position in an information recording area and disc inherent information are recorded. A wobble modulation area includes 16 wobbles among 93 wobbles. Furthermore, one symbol corresponding to 1 bit of information recorded on a wobble signal includes 4 wobbles. The specification of the wobble signal is not limited to the above specification. However, the explanation is continued with reference to this specification unless otherwise noted.

(Layout of Information Area)

FIGS. 7A and 7B show layouts of respective layers of a disc. On Layer 0 and Layer 1, areas are divided to have the almost same configurations. However, a BCA area is arranged in any one of Layer 0 and Layer 1. This is to stabilize information reading from the BCA area. Since an interlayer crosstalk is large in a BCA mark used in recording of a signal in the BCA area, if the BCA areas are arranged in the two layers, signals of the two layers interferes with each other to make it difficult to read information.

The configuration of areas of the layer is divided into a burst cutting area (BCA), an emboss management zone (System Lead-in or System Lead-out area), an inner circumference recordable management zone (Data Lead-in or Data Lead-out are), a data area, and an outer circumference recordable management zone (Middle area) which are arranged from the inner circumference portion. In the BCA area, a BCA mark is recorded in advance by grooving the substrate, peeling a reflected film, and changing the recording medium. The BCA mark is a comb-like mark which is modulated along a circumferential direction of the optical disc and which has the same information arranged along a radial direction. A BCA code is recorded by modulation performed by an RZ modulation method. A pulse having a narrow pulse width (= low reflectance) must be narrower than a half of a channel lock width of the BCA code. Since the BCA marks have the same information along the radial direction, the BCA marks need not be tracked. Information can be reproduced from the BCA mark merely by focusing the BCA mark.

Information is recorded by emboss pits in the emboss management zone. The information includes optical disc management data such as identification information of a disc and a capacity of a data area. A shortest mark length of the emboss pit in the area is twice the length of the data area. As a result, information in a normal data area is reproduced by a PRML method. However, information can also be demodulated by using a slice method in the emboss management zone, and reliability of information reading is improved. Since management data serving as a base of information reading from the disc, information of copyright management, and the like are recorded in the emboss management zone, it is important to improve the reading reliability of the emboss management zone.

In the recordable management zone, as in the data area, a groove serving as a guide groove is formed. In this area, signals are recorded at a density equal to that of the data area. In this area, a test write area, a management zone to recognize a recording state of the data area, a tracking overrun area for DPD tracking, a guard zone to keep an amount of interlayer crosstalk constant, and the like are arranged.

In the data area, data such as video data and user data are recorded.

(Interlayer Crosstalk)

An interlayer crosstalk of an optical disc according to the embodiments of the present invention will be described below. In the dual-layer disc according to the embodiments of the present invention, as shown in FIGS. 8A and 8B, if the recording state of a layer (Layer 0) except for of a layer which is being reproduced (Layer 1 is being reproduced) is not uniform, a signal of Layer 1 (push-pull signal) in reproduction is disadvantageously offset by the crosstalk. As shown in FIG. 9, when a signal is recorded on Layer 1, an optimum recording power changes depending on whether Layer 0 is recorded or unrecorded. These problems occur for reasons that a transmittance and a reflectance of a recording medium of Layer 0 change depending on a recorded state and an unrecorded state, and that an intermediate layer cannot be made thick to suppress an optical aberration, and for other reasons. However, it is very difficult to physically reduce these characteristics. Therefore, in an optical disc according to the embodiments of the present invention, a clearance (record inhibition area) as shown in FIG. 10 is formed to make it possible to record and reproduce information without any problem even though the signals are offset.

FIG. 10 shows a recordable range of Layer 1 when Layer 0 is recorded.

The recordable range of Layer 1 is a range obtained by subtracting clearances on both the sides from the recorded range of Layer 0. The width of the clearance can be calculated by equation (1).

$$\text{clearance} = \Delta r + e + \Delta s \qquad (1)$$

where $\Delta r$ is a relative difference of actual radial positions and the same design radii of Layer 0 and Layer 1, the difference being caused by a manufacturing error or the like and, e is an amount of eccentricity. Reference symbol $\Delta s$ is a radius of a ray bundle on the layer which is not being reproduced.

(Detailed Layout)

FIGS. 11 and 12 show examples of detailed layouts of information areas on an inner circumference portion and an outer circumference portion of a dual-layer optical disc according to the embodiments of the present invention. A BCA area (not shown) is on an innermost circumference of Layer 0 or Layer 1. In an inner circumference recordable management zone of Layer 0, two guard zones, a test zone (608 physical segment (PS) blocks), a management zone (400 PS blocks), and a format information recording area are arranged. In the inner circumference recordable management zone of Layer 1, two guard zones and a test zone (608 physical segment (PS) blocks) are arranged. The guard zone is an area in which dummy data is recorded or held while being unrecorded for countermeasures against overrun of DPD tracking and an interlayer crosstalk. The test zone is an area in which test writing for optimizing a recording waveform is performed before management data and user information are recorded on the optical disc. The management zone is an area in which management data for managing a state of data which is being recorded in the data area is recorded.

The test zone in Layer 0 is arranged at a position separated from the emboss management zone by the length of the clearance (guard zone) to avoid a crosstalk in the emboss management zone. The test zone and the management zone on Layer 0 are adjacent to each other and arranged to overlap the guard zone of Layer 1. The guard zone of Layer 1 has a width which is larger than a sum of widths of the test zone and the management zone of Layer 0 by the widths of the clearances on both the sides. On the other hand, the test zone of Layer 1 is arranged to overlap the guard zone of Layer 0 and has a width which is narrower than the guard zone of Layer 0 by the widths of the clearances on both the sides. The guard zone can record dummy data or be held unrecorded regardless of recording of data. For this reason, the layout of the optical disc according to the embodiments of the present invention has a following feature. That is, a state of an opposite layer overlapping the test zone and the management zone is a uniform state, i.e., a recorded state or an unrecorded state, to make it possible to stably perform test writing and record management data.

In each of the outer circumference recordable management zones of Layer 0 and Layer 1, two guard zones and a test zone are arranged as shown in FIG. 12. As in the inner circumference portion, a guard zone is arranged on an opposite layer overlapping the test zone, and the width of the guard zone is larger than a sum of the width of the test zone and the widths of the clearances on both the sides. An inner guard zone of Layer 1 can also be used as an extended management zone.

(Content of BCA)

FIG. 13 shows contents of information recorded in a BCA area of the optical disc according to the embodiments of the present invention. BCA data includes two BCA preambles 73 and 74, two postambles 76 and 77, and BCA data areas (BCAA) 78 and 79. A BCA error detection code $EBC_{BCA}$ 80 and a BCA error correction code $ECC_{BCA}$ 81 are added to each of the BCA data areas (BCAA) 78 and 79, and a BCA concatenation area 75 is arranged between the BCA postamble 76 and BCA preamble 74. Furthermore, one sync byte $SB_{BCA}$ 83 or one resync byte $RS_{BCA}$ 84 is inserted per four bytes. Each of the BCA preambles 73 and 74 includes four bytes and has all "00h" recorded therein. The sync byte $SB_{BCA}$ 83 is arranged immediately before each of the BCA preambles 73 and 74. In each of the BCA data areas (BCAA) 78 and 79, 76 bytes are set. Each of the postambles 76 and 77 includes 4 bytes and has all repeated patterns of "55h" recorded therein. The BCA concatenation area 75 includes 4 bytes and has all "AAh" repeatedly recorded therein.

In the BCA data area, one BCA record serving as one unit or pieces of information is recorded. The pieces of information include, for example, identification information of a disc or information for copy control. FIG. 14 shows an example of a BCA record representing identification information of a disc. As the first two bytes, a BCA record identifier representing a type of the BCA record (identification information, copy control information, or the like) is recorded. Subsequently, a version number (1 byte) of a BCA record representing a format of the BCA record is recorded. Next, a data length (1 byte) for determining a size of the BCA record is recorded. The length does not include 4 bytes of the BCA record identifier serving as a header of the BCA record to the data length.

A 1-byte book type/disc type is recorded. The book type is an identifier representing, a format of a disc and a read-only type, a write-once type, a rewritable type, or a format type such as a single-side single-layer type or a single-side dual-layer type. In the disc type, as shown in FIG. 15, pieces of information are allocated to bits, respectively. As the uppermost bit, a mark polarity representing whether a reflectance of a recording mark (pit) is higher (Low to High record) or lower (High to Low record) than an unmarked portion. As the next bit, a flag representing whether the disc is a twin format (TF) disc having formats changed depending on layers is recorded. A TF flag of "0" in the binary system represents that the disc is not a twin format disc. A TF flag of "1" in the binary system represents that the disc is a twin format disc. The next two bits are used as tracking polarity identifiers of a tracking signal. Bit b1 represents information of Layer 1, and bit b0 represents information of Layer 0. When the value is "0", a signal is recorded or reproduced on/from a groove track. When the value is "1", a signal is recorded or reproduced on a land track.

Furthermore, a 1-byte extended part version and a 1-byte extended disc type are recorded, and the final 1 byte is reserved. As shown in FIG. 16, at the uppermost bit of the extended disc type, a dual-layer flag representing whether the disc is a dual-layer disc or not is provided. When the disc is a dual-layer disc, the identifier is "1", otherwise, the identifier is "0". Furthermore, a BCA position flag is arranged which is set to "1b" if the BCA is arranged in Layer 0.

As another embodiment, as shown in FIG. 17, when all data are recorded at a groove track in Layer 0, a dual-layer flag may be arranged in place of a tracking polarity at the lowermost bit b0 of the disc type.

In any case, the BCA on the innermost circumference of a disc is reproduced to make it possible to quickly determine whether the disc is a dual-layer disc. Furthermore, polarity information of a recording track of each layer can be acquired. For this reason, thereafter, a process of accessing a data area and a recordable management zone of a desired layer to operate tracking servo can be advantageously rapidly performed.

(Contents of Emboss Management Area Format Information)

FIG. 18 shows contents of physical format information in an emboss area formed on Layer 0.

The book type (BP 0) is an identifier representing a format of a disc, such as a read-only disc, a rewritable disc, a recordable disc, a re-recordable disc, a high density read-only disc, a high density rewritable disc, a high density recordable disc, or a high density re-recordable disc. A part version (BP 0) is version management data of the format.

As a disc size (BP 1), information representing a diameter of the disc is recorded. For example, 0000b is recorded when a 12-cm disc is used, and 0001b is recorded when an 8-cm disc is used.

As a maximum transfer rate of the disc (BP 1), if necessary, a maximum transfer rate required to normally reproduce data recorded on the disc is recorded. Examples of the maximum transfer rates are 2.25 Mbps, 5.04 Mbps, 10.08 Mbps, 20.16 Mbps, and 30.24 Mbps.

As a disc structure (BP 2), the number of layers in the format, polarity information (track path) indicating whether a track is directed from the inner circumference to the outer circumference or from the outer circumference to the inner circumference on each layer, and layer type representing whether or not the disc contains a rewritable user data area, a recordable user data area, or an embossed user data area are recorded. The number of layers is not the number of layers of the disc but the number of layers in the format.

A recording density (BP 3) includes information representing a linear density in a disc tangential direction and a track density. Examples of the linear density are 0.267μm/bit, 0.293μm/bit, 0.409 to 0.435μm/bit, 0.280 to 0.295μm/bit, 0.153μm/bit, and 0.130 to 0.140μm/bit. Examples of the track density are 0.74μm/track, 0.80μm/track, 0.615μm/track,

0.40μm/track, and 0.34μm/track.

Details of a data area allocation (BP 4 to BP 15) are shown in FIG. 19.

A BCA descriptor (BP 16) specifies that the BCA exists or not.

Byte positions 17 to 26 specify ID information of recordable recording speed.

Byte position 27 specifies an extended part version of the book.

Byte positions 28 to 31 are reserved.

An actual number of maximum reading speed (BP 32) specifies the actual number of maximum reading speed that is allowable for this disc. The actual maximum reading speed is specified on the basis that 1x reading speed is the channel bit rate of 64.8 Mbps, and specified by the following formula.

$$\text{Actual maximum reading speed} = \text{Value} \times 0.1$$

A layer format table indicates a format for each of Layers 0 and 1.

Byte position 33 specifies a layer format table.

Byte positions 34 to 127 are reserved.

A mark polarity descriptor (BP 128) defines a disc type of reflectivity. For example, 0b indicates that a signal from a mark is larger than a signal from a space, i.e., the disc is a Low-to-High disc and 1b indicates that a signal from a mark is smaller than a signal from a space, i.e., the disc is a High-to-Low disc.

A velocity (BP 129) defines a linear velocity for the disc. For example, 0100 0010b indicates 6.6 m/s. The actual velocity is specified by the following formula.

$$\text{Actual linear velocity} = \text{Value} \times 0.1\ (\text{m/s})$$

A rim intensity in tangential direction (BP 130) specifies the Rim intensity in tangential direction of the reference optical head in which BP 132 is defined. The actual Rim intensity is specified by the following formula.

$$\text{Actual Rim intensity} = \text{Value} \times 0.01$$

A rim intensity in radial direction (BP 131) specifies the Rim intensity in radial direction of the reference optical head in which BP 132 is defined. The actual Rim intensity is specified by the following formula.

$$\text{Actual Rim intensity} = \text{Value} \times 0.01$$

A read power (BP 132) specifies the read power on the read-out surface of the disc for playback. For example, 0000 0101b indicates 0.5 mW. The actual read power is specified by the following formula.

$$\text{Actual read power} = \text{Value} \times 0.1\ (\text{mW})$$

An actual number of i-th recording speed (i = 1, 2, ... 16) (BP 133 to BP 148) specifies the actual number of i-th recording speed, where "i-th" means i-th lowest recording speed among the applicable recording speed(s) of the disc. Therefore, BP 133 is filled with the value for the minimum recording speed. For example, 0000 1010b indicates 1x and 0000 0000b is reserved. The actual i-th recording speed is specified on the basis that 1x recording speed is the basic recording speed for Class 0, and specified by the following formula.

$$\text{Actual i-th recording speed} = \text{Value} \times 0.1$$

If there is no i-th recording speed, this byte are reserved.

A reflectivity of data area for Layer 0/1 (BP 149 or BP 152) specifies the reflectivity of data area for each layer. For example, 0000 1010b indicates 5%. The actual reflectivity of data area is specified by the following formula.

$$\text{Actual reflectivity of data area} = \text{Value} \times 0.5$$

A bit b7 of push-pull signal for Layer 0/1 (BP 150 or BP 153) specifies the track shape of the disc for each layer and remaining bits b6 to b0 specify the amplitude of the push-pull signal. For example, 010 0000b (the amplitude of the push-pull signal) indicates 0.40. An amplitude of the push-pull signal is $(I_1\text{-}I_2)$ pp/ $(I_1\text{+}I_2)_{DC}$ for before recording. The actual amplitude of the push-pull signal is specified by the following formula.

$$\text{Actual amplitude of push-pull signal} = \text{Value} \times 0.01$$

An "on track signal for Later 0/1" (BP 151 or BP 154) specify the amplitude of the on track signal for each layer. For example, 0100 0110b indicates 0.7. The actual amplitude of the on track signal is specified by the following formula.

$$\text{Actual amplitude of on track signal} = \text{Value} \times 0.01$$

Byte positions 155 to 511 are reserved.

Byte positions 512 to 539 specify write pulse information for layer 0.

Byte positions 540 to 567 specify write pulse information for layer 1.

Byte positions 568 to 2047 are reserved.

FIG. 19 shows detailed contents of the data area allocation (BP 4 to BP 15). The data area allocation includes a start PSN of the data area (04 0000h) of 3 bytes, a maximum PSN of the data recordable area (FB CCFFh) of 3 bytes, and an end PSN on Layer 0 (73 DBFFh) of 3 bytes. The start PSN of the data area represents a start PSN of a data area of Layer 0. The maximum PSN of the data recordable area represents an end PSN of a data area of Layer 1. The end PSN on Layer 0 represents a final PSN of the data area of Layer 0.

(Content of Recordable Management Area Format Information)

FIG. 20 shows format information of a recordable management zone.

The format information shown in FIG. 20 is recorded in the recordable management zone in a process of recording information on a disc by an optical disc device. Details of the data area allocation (BP 4 to BP 15) differ from those of FIG. 18. FIG. 20 differs from FIG. 18 in that a start PSN of a border zone (BP 256 to 263) is additionally recorded.

FIG. 21 shows contents of the data area allocation (BP 4 to BP 15) in the format information of a recordable management zone shown in FIG. 20A. In this data area allocation, a start physical sector number (PSN) of a data area (04 0000h), a last recorded PSN of last R zone, and an end PSN on Layer 0 are recorded.

FIG. 22 shows details of a start physical sector number of a border zone in format information of a recordable management zone. A start physical sector number (PSN) of a border-out area of the first border and a start physical sector number (PSN) of a border-in area of the next border are recorded. When the next border is inhibited to be formed, all start physical sector numbers of a border-in area are filled with 0. Therefore, when the numbers are filled with 0, it can be determined that the disc is finalized.

(Management Zone)

FIG. 23 shows a configuration of a management zone. Lead-in recording management data (RMD) is recorded in the first block of the management zone. A recording management data duplication zone is allocated to next 7 blocks of the management zone. A recording management zone is allocated to the remaining area. Lead-in recording management data is information which is recorded when the optical disc device records data in the management zone for the first time. As the information, as shown in FIG. 24, a drive manufacturer identification number which is an identification number of a manufacturer of an optical disc device to perform recording, a serial number and a model number of the drive, and a unique disc identifier are recorded. As a unique disc identifier, a number inherent to each disc is recorded by the optical disc device to identify the disc.

In the recording management data duplication zone, a copy of recording management data is recorded when a management zone is extended. In the recording management zone, recording management data (RMD) representing a recording state of a data area are sequentially recorded block by block. Since information cannot be overwritten on a write-once disc, pieces of information are sequentially and additionally recorded on next unused blocks each time the contents of the recording management data are updated. Therefore, rearmost information is the latest RMD information.

FIG. 25 shows a configuration of the recording management data.

The recording management data includes 32 fields. The first field is reserved. Numbers are sequentially allocated to the next fields. Different pieces of information are recorded in the fields, respectively.

FIG. 26 shows RMD information of field 0.

RMD format (BP 0 to BP 1) specifies the RMD format code. The RMD format code indicates the recording format of the RMD.

Disc status (BP 2) specifies disc status as follows.

00h ... To indicate that the disc is empty

02h ... To indicate that the disc is recorded and not finalized

03h ... To indicate that the disc is finalized

08h ... To indicate that the disc is in Recording Mode U

Others ... reserved

As disc status, as shown in FIG. 27, padding status and finalize information are recorded. For example, the padding status is allocated to upper 4 bits, and the finalize information is allocated to lower 4 bits. As the padding status, information representing whether the guard zone of Layer 0 is recorded or unrecorded is recorded. When the information representing that the guard zone of Layer 0 is recorded is recorded, recording on Layer 1 can be started. As the finalize information, information representing whether data recorded on the disc is finalized is recorded. For example, 0h represents a state in which data is recorded in the data area, and 1h represents that the data is finalized with one border. 2h represents a state in which data is recorded in the data area and not finalized. Furthermore, 3h represents that the disc is finalized in a state except for the state represented by 1h.

As another embodiment, when by using a spare of byte position 3 in FIG. 26, finalize information and formatting information are arranged at byte position 2 and byte position 3, respectively, a larger number of pieces of information can be recorded.

FIG. 28 shows details of a data area allocation in recording management data. Byte position 22 is reserved. Byte positions 23 to 25 specify a start PSN of the data area (04 0000h). Byte position 26 is reserved. Byte positions 27 to 29 specify a maximum PSN of the data recordable area (FB CCFFh). Byte position 30 is reserved. Byte positions 31 to 33 specify an end PSN on layer 0 (73 DBFFh).

FIG. 29 shows contents of a renewed data area allocation. In the renewed data area allocation, values of a data area allocation updated in formatting or finalizing. An update identifier is information representing a state in which the data area allocation is updated. When the data area allocation is updated in formatting, 1h is recorded. When the data area allocation is updated in finalizing, 2h is recorded.

FIG. 30 shows contents of test zone arrangement information. Since the position of the test zone may be changed by extension or shift, a start physical sector number and an end physical sector number of the latest test zone (inner circumference test zone, outer circumference test zone, or extended test zone) or an area size is recorded on the bytes of the test zone.

FIGS. 31A and 31B show RMD information of field 1. The RMD Field 1 contains the OPC (optimum power control) related information. In the RMD Field 1, it is possible to record the OPC related information for up to 4 drives that may coexist in a system. In the case of a single drive, the OPC related information is recorded in the field #1 and the other fields are set to 00h. In every case, the unused fields of the RMD Field 1 are set to 00h.

The OPC related information of the present drive is always recorded in the field #1. If the field #1 of the current RMD does not contain the present drive information, which consists of drive manufacturer ID, serial number and model number, the information in the field #1 to field #3 of the current RMD is copied to the field #2 to field #4 of the new RMD and the information in the field #4 of the current RMD is discarded.

If the field #1 of the current RMD contains the present drive information, the information of the field #1 is updated and the information of the other fields is copied to the field #2 to field #4 of the new RMD.

FIG. 32 shows contents of RMD information of field 3. In field 3, a border-out start physical sector number (PSN) of each border area, a currently used management zone number, a start PSN and a size of each extended management zones, a currently used test zone number, and a start PSN and an end PSN of each extended test zones are recorded.

FIG. 33A shows contents of RMD information of field 4.

The RMD Field 4 specifies the information of R zone.

The portion of the data recordable area that is reserved for recording user data is called the R zone. The R zone is divided into 2 types, depending on the recording conditions. In an open R zone, additional data can be appended. In a complete R zone, no future user data can be appended. There are not more than two open R zones in a data recordable area.

The portion of the data recordable area that is not yet reserved for recording data is called an invisible R zone. Areas for subsequent R zones can be reserved in the invisible R zone.

If no further data can be appended, then no invisible R zone exists.

Invisible R zone number (BP 0 to BP 1) specifies the invisible R zone number. The invisible R zone number is the total number of invisible R zone, open R zones and complete R zones.

First open R zone number (BP 2 to BP 3) specifies the first open R zone number. If there is no first open R zone, then all bytes of this field shall be set to 00h.

Second open R zone number (BP 4 to BP 5) specifies the second open R zone number. If there is no second open R zone, then all bytes of this field shall be set to 00h.

BP 6 to BP 15 are reserved. All bytes are set to 00h.

Start PSN of R zones #n (n = 1, 2, ..., 254) (BP 16 to BP 19, BP 24 to BP 27, ..., BP 2044 to BP 2043) specify the start PSNs of the R zones. If these fields are set to 00h, then there is no R zone reserved for this R zone number.

Last recorded PSNs of R zones #n (n = 1, 2, ..., 254) (BP 20 to BP 23, BP 28 to BP 31, ..., BP 2044 to BP 2047) specify the PSNs of the last recorded physical sectors of the R zones except for the sector whose data type is 1b (padding data). If these fields are set to 00h, they do not mean the recorded PSNs for this R zone number.

FIG. 33B shows contents of RMD information of fields 5 to 21. Information which manages a state of a user data area recorded in a data area is recorded in fields 5, 6, ..., 21. The user data area is divided into R zones and managed. In fields 5, 6, ..., 21, start physical sector numbers (PSN) of the R zones and a last physical sector number (PSN) of an area which is recorded at present in the R zone are recorded. Up to three open R zones in which recording is stopped on the way in the R zones are permitted to be formed. A byte on which a number of the R zone in which recording is not finished is also set.

(Data Area and Border)

FIGS. 34A, 34B, 34C, 34D, 34E, and 34F show recording states of a data area. In the data area, as shown in FIG. 34A, user data is recorded in units of R zones. At this time, pieces of information such as a start physical sector number of a recorded R zone are sequentially recorded as recording management data and managed. When border closing is performed, a border-out area is formed subsequently to user data as shown in FIG. 34B in the first border closing. At this time, physical format information of a recordable management zone (not shown) is also recorded. The border-out area functions as an overrun area in DPD tracking. When the border closing is performed, an area in which user data is recorded is called a user data area. From the area, information can also be read by a device such as an optical disc player which performs tracking by DPD tracking.

When next data is recorded, as shown in FIG. 34C, a border-in area is left unrecorded, and data are sequentially recorded in the R zones. In this case, when border closing is performed, as shown in FIG. 34D, a border-in area and a border-out area are formed. At this time, updated format information is recorded in the border-in area.

The updated format information is the same information as the physical format information shown in FIG. 20. However, a data area allocation and start physical sector number of a border zone have values of target borders.

A state in which the second border closing is performed is shown in FIG. 34E.

Finally, when the disc is finalized, as shown in FIG. 34F, a border-out area or a terminator is recorded up to the final physical sector of Layer 1. The terminator is dummy data having all values of "0". When finalizing of the disc is finished, the disc state of recording management data is updated.

(Border)

FIGS. 35A and 35B show configurations of a border-out area and a border-in area and a size of the border-out area. As shown in FIG. 35A, a copy of RMD is recorded in the border-out area, and updated format information is recorded in the border-in area. One recording unit is a physical sector (PS) block and includes 32 physical sectors. The border-out area is used as an overrun area of tracking, as shown in FIG. 34B, the size of the border-out area increases toward the outer circumference of the disc.

(Formatting)

Formatting of a disc will be explained below. In the optical disc according to the embodiments of the present invention, in order to perform stable recording, information can be recorded on Layer 1 at only a portion overlapping a recorded portion of Layer 0. Therefore, before information is recorded on Layer 1, Layer 0 must be formatted. The formatting may be performed in advance before information is recorded on the disc, or may be performed immediately before recording on Layer 1 is started after the recording on Layer 0 is finished. The formatting mainly includes two operations. One operation records data such as dummy data in a necessary guard zone of Layer 0, i.e., a guard zone near a data area. The other operation changes a recordable maximum physical sector number of Layer 0.

FIG. 36 shows a range (inner circumference portion) in which a signal is recorded in formatting, and FIG. 37 shows a range (outer circumference portion) in which a signal is recorded in formatting. A hatched area is a recording potion. Data to be recorded is dummy data all the values of which are "0". Data are recorded in the guard zones in FIGS. 36 and 37 by formatting, then the test zone and start and rear end portions of the data area of Layer 1 are recordable to make it possible to record information on Layer 1. Furthermore, on the optical disc, when formatting is completed, format information of disc states of recording management data shown in FIGS. 18A, 18B, and 27 is changed.

When the formatting process, i.e., recording in the guard zone is performed in advance before the disc is shipped, a user can immediately record information on the disc without performing a format process.

FIGS. 38 and 39 show changes of areas when the recordable maximum physical sector number of Layer 0 is changed. When an amount of data to be recorded is determined in advance, and a disc need not be used up to the outermost circumference, a recordable maximum physical sector number of Layer 0 may be changed to make it unnecessary to fill the data area with excessive dummy data or the like. Finalizing of the disc can be advantageously performed at a high speed, and the outer circumference portion having relatively poor recording quality can be advantageously prevented from being used. In formatting, a desired physical sector number may be recorded as an update recordable maximum physical sector number of recording management to make it possible to change the update recordable maximum physical sector number of Layer 0, i.e., the width of the data area. Furthermore, in border closing and finalizing, the value of the data area allocation in formation information also changes.

At this time, as shown in FIG. 38, the position of the guard zone subsequent to the data area shifts in the inner circumference portion. Alternatively, as shown in FIG. 39, new guard zones A0 and A1 are generated. In this case, guard zones in which dummy data are recorded in formatting are only guard zones A0 and A1 adjacent to the data area. As the width of the guard zone, at least a width exceeding the clearance may be used. However, if the width of the guard zone is larger than the above width, excessive records disadvantageously increase. Therefore, when the guard zone moves to the inner circumference portion, a necessary amount of data decreases accordingly. FIG. 40 shows a size of a typical guard zone of a disc in which a start sector number and an end sector number of a data area of Layer 0 are 40000h and 73DC00h, respectively. When an update recordable maximum physical sector number changes to the inner circumference portion, the size of the guard zone may be continuously changed. However, in this case, fixing of the size of the guard zone is cumbersome. For this reason, in the present embodiment, the data area is divided into three areas, and a value which can sufficiently assure a clearance is set in the divided area to make it easy to determine the size of the guard zone. The value in FIG. 40 represents the number of PS blocks. One PS block includes 32 sectors.

The minimum number of data required for the guard zone can be determined by the following equations (2) and (3).

The number of PS blocks of guard zone of L1
$$= \pi\{(\text{radius} + \text{clearance})^2 - (\text{radius})^2\}$$
/track pitch/length of one PS block in linear direction (2)

The number of PS blocks of guard zone of L0
= (the number of PS blocks of guard zone of L1) × 2 + (the number of PS blocks of test zone of L1) (3)

In the present embodiment, the calculation is performed where a clearance is about 100 μm, a track pitch is 0.4 μm, and a length of one PS block in a linear direction is 13546.01 μm (132804 channel bits x 0.102 μm).

(Extension of Test Area)

The test zone is also shifted or extended like the guard zone. The position of the shifted or extended test zone is recorded as arrangement information in the test zone of the recording management data.

(Recording Order)

A recording order on an optical disc according to the embodiments of the present invention will be explained below.

(Example 1)

In a recording order shown in FIGS. 41A and 41B, the width of a data area is fixed by formatting first, and recording of a predetermined guard zone of Layer 0, a format information zone of Layer 0, a management zone of Layer 0, and the like is performed. Thereafter, data is recorded in the data area. The recording of data is started from the innermost circumference of Layer 0. Upon completion of recording of Layer 0, a laser beam is moved to Layer 1 to record the data from the outer circumference to the inner circumference of Layer 1. When the data does not reach the innermost circumference of Layer 1, the optical disc device automatically records dummy data such as a terminator to fill all of the data areas of Layer 0 and Layer 1 with recording data. Furthermore, recording of the guard zone of Layer 1 is performed to complete recording of the disc. FIGS. 41A and 41B correspond to the upper side and the lower side of FIG. 39.

(Example 2)

In a recording order shown in FIGS. 42A and 42B, a method of sequentially and additionally recording data in a state in which only one open R zone is used. Data recording is started from the inner circumference of Layer 0. Upon completion of recording of Layer 0, recording is started from the outer circumference of Layer 1. This order is a recording order as shown in FIGS. 34A to 34F (border structure).

(Example 3)

In a recording order shown in FIGS. 43A and 43B, a method of additionally recording data in a state in which a plurality of open R zones are present. In this case, as shown in FIG. 43A, an open R zone is present on Layer 0. When Layer 0 has an unrecorded area, an overlapping portion of Layer 1 is a recording inhibition area. As shown in FIG. 43B, when recording is performed in the unrecorded area of Layer 0, the recording inhibition of Layer 1 is canceled.

(Method of Recording Inhibition)

FIGS. 44A and 44B show a relationship between an open R zone of Layer 0 and a range of a recordable area. In the state shown in FIG. 44A, an inner circumference guard zone and an outer circumference guard zone of Layer 0 are recorded, and data is recorded on Layer 0. However, Layer 0 has two open R zones, and data is not recorded in the open R zones. In this case, a recordable range serving as a final open R zone, as shown in FIGS. 44A and 44B, is a portion obtained by subtracting the number of sectors "A" which is required to assure a clearance from a physical sector of Layer 1 corresponding to the final physical sector of an open R zone located on the outer circumference portion of Layer 0.

Data is recorded in a second open R zone in the state in FIG. 44A. When the second open R zone is filled with recording data, the recordable area, as shown in FIG. 44B, extends to a portion defined by a final sector number of the first open R zone.

The width of a clearance is determined according to equation (1). However, when the clearance is constant on a disc, the number of sectors required to assure the clearance is small on the inner circumference portion. When an update recordable maximum physical sector number changes to the inner circumference portion, the range of recording inhibition may be continuously changed. However, a fixing of the range is cumbersome. In the present embodiment, the data area is divided into a plurality of areas, and a value which can sufficiently assure a clearance in the divided data area is set to make it easy to determine the range of recording inhibition.

FIG. 45 shows the number of sectors "A" required to assure a clearance on the optical disc according to the present embodiment. In the optical disc according to the present embodiment, a number obtained by bit-inverting a physical sector number of Layer 0 is assigned to a number of a physical sector number of Layer 1 at the same radius as that of the physical sector number of Layer 0. Therefore, the final physical sector number of a recordable area of Layer 1 is a value obtained by subtracting the number "A" from a value obtained by bit-inverting a final physical sector number of an outer circumference open R zone of the first and second open R zones. The minimum number of data required to assure a clearance can be determined by the following equation (4).

$$\text{The number of sectors} = \{\pi\{\text{radius} + \text{clearance})^2 - (\text{radius})^2\}/(\text{track pitch})/(\text{linear length of one PS block})\} \times 32 \quad (4)$$

The number "32" is the number of sectors included in the one PS block.

(Example 4)

In a recording order shown in FIG. 46, a method of, repeatedly, recording a predetermined amount of data on Layer 0 and subsequently recording data within the same radius width of Layer 1 is used. However, the recording range of Layer 1 is narrower than the recording range of Layer 0 by widths of clearances as shown in FIG. 11 and 12.

(Finalization)

FIGS. 47A, 47B, and 47C and FIGS. 48A and 48B show states of a disc when the disc is finalized. The state shown in FIG. 47A shows a case in which recording is stopped halfway on Layer 0. In this case, as simplified finalization, finalization as shown in FIG. 47B can be performed. Upon completion of recording of user data, an end physical sector number of the user data is recorded as update recordable maximum physical sector number of recording management data, and the width of a data area is changed. A border-out area is recorded in a guard zone on the inner circumference portion of Layer 0 and a guard zone shifted to a portion adjacent to the data such as format information and the data area in the outer circumference portion, so that the simplified finalization is completed.
Furthermore, as shown in FIG. 47C, when dummy data (terminator) is recorded in a range of Layer 1 corresponding to the recording range of Layer 0, reproducing compatibility of the disc is more improved. This finalization is called perfect finalization.
The state shown in FIG. 48A shows finalization performed when recording data is also present on Layer 1. When the recording data is also present on Layer 1, an unrecorded portion such as format information or an open R zone of Layer 1 is recorded as shown in FIG. 48B, then terminator is recorded on the unrecorded portion of data area of Layer 1, and the guard zone of Layer 1 is recorded to complete the finalization. Furthermore, in the finalization, finalize information of a disc state of field 0 of recording management shown in FIG. 27 is changed.

(Extension of Recording Management Area)

In the optical disc according to the present embodiment, a recording management zone can be extended. When the recording management zone prepared for a recordable management zone on the inner circumference portion is entirely recorded, the recording management zone is extended. The recording management zone can be extended in a border-in area as shown in FIG. 49. This extended area is formed in an area saved as a border-in area when the border is closed and a new border is formed.
When the recordable maximum physical sector number is updated as shown in FIG. 50, the recording management zone can be extended on the outer circumference portion.
Furthermore, as shown in FIG. 12 (outer circumference configuration), even though the recordable maximum physical sector number is not updated, a part of the guard zone on the outer circumference of Layer 1 can be used as a recording management zone. When the recording management zone is extended, the recording management zone which is being used at this time is padded by the latest recording management data. Furthermore, a copy of the latest recording management data is recorded in a recording management data duplication zone. In addition, a start physical sector number and size information of an extended management zone #n of the recording management data are updated.
As a result, a currently used recording management zone is always formed at one position. Furthermore, with reference to the recording management data duplication zone, the position of the latest recording management zone can be advantageously found.

(Other Layout)

A detailed layout on an inner circumference portion of an optical disc according to another embodiment is shown in FIG. 51. In the present embodiment, a recording management zone can be extended to the inner circumference portion of Layer 1. Since the recording characteristics on the inner circumference portion is stable more than that of the outer circumference portion, the layout has security higher than a layout in which a recording management zone is extended to an outer circumference portion. The recording management zone is adjacent to a data area, so that access to the data area is advantageously simple.

FIG. 52 shows a detailed layout on an inner circumference portion of an optical disc according to still another embodiment. In the present embodiment, a recording management zone can be extended to the inner circumference portion of Layer 1. The recording management zone is adjacent to a data area, so that access to the data area is advantageously simple.

FIG. 53 shows a detailed layout on an outer circumference portion of an optical disc according to still another embodiment. In the present embodiment, since a data area of Layer 1 shifts from the data area of Layer 0 to the inner circumference portion by a width of a clearance, when a data area of Layer 0 is recorded, information can be recorded in a data area of Layer 1 even though a guard zone on the outer circumference portion is not recorded.

(Player Device)

FIG. 54 shows a configuration of an optical disc player according to the embodiments of the present invention. In general, on a read-only disc 110, address information is formed by pits together with user data. Therefore, an address is read by an RF signal processing circuit 130 simultaneously with reproducing of data. The configuration other than a recording function is the same as that of a recording/reproducing device. However, since it is assumed in the player device that tracking control is generally performed only to emboss pits, the device has only a tracking control function of a DPD method but a tracking control function of a push-pull method. As a result, an unrecorded area cannot be accessed, and data in only a continuous recording area can be reproduced.

In general, when an outer circumference portion of Layer 1 of a dual-layer disc is to be accessed, as indicated by an arrow in FIG. 55A, after Layer 1 is accessed subsequent to an access of Layer 0, the outer circumference of Layer 1 is accessed. Therefore, Layer 1 can be accessed while checking an address of Layer 1.

On the other hand, in the optical disc device according to the present embodiment, in order to avoid passing through an unrecorded area of Layer 1, as shown in FIG. 55B, the step of accessing the outer circumference of Layer 0 and then accessing Layer 1 is employed. In this manner, the optical disc according to the present embodiment checks a finalize state of a disc based on format information or the like. The device has a function of employing the access method shown in FIG. 55A when the disc is finalized and employing the access method shown in FIG. 55B when it is determined that the disc is not finalized.

As described above, according to the embodiments of the present invention, the predetermined ranges at both the end portions of the area of Layer 1 corresponding to a recorded area of Layer 0 are set to record inhibit areas. For this reason, even if a relative difference between actual radial positions of the same design radiuses of Layer 0 and Layer 1 is occurred due to a manufacturing error or the like, an influence of crosstalk can be suppressed.

Since a test zone of Layer 0 is arranged at a position separated from an emboss management zone by a width of a clearance (guard zone), crosstalk of the emboss management zone can be avoided. A guard zone of Layer 1 is wider than a sum of the width of the test zone and the width of the management zone of Layer 0 by the widths of the clearances on both the sides. The test zone of Layer 1 is narrower than the guard zone of Layer 0 by the clearances on both the sides. Accordingly, state of another layer overlapping the test zone and the management zone is always constant, i.e., a recorded state or an unrecorded state. Therefore, stable test writing or recording of management data can be performed.

## Claims

1. A singie-sided multilayered information recording medium having recording layers, **characterized in that**
an emboss management zone, an inner recordable management zone, a data area, and an outer recordable management zone are sequentially arranged from an inner side of each of the recording layers, and
a burst-cutting area is arranged inward of the emboss management zone in any one of the recording layers.

2. The information recording medium according to claim 1, **characterized in that** the number of recording layers is two, each layer includes at least one of a test zone, a management zone, and a guard zone in at least one of the inner recordable management zone and the inner recordable management zone, and
the test zone and the management zone of one layer overlap the guard zone of another layer.

3. The information recording medium according to claim 1, **characterized in that**
the recording layers include a first layer and a second layer,
the information recording medium is set to a drive such that the first layer is nearer to a laser source than the second layer,
a first guard zone, a test zone, a management zone, a second guard zone, and a format information zone are sequentially arranged from an inner side in the inner recordable management zone of the first layer, and
a first guard zone, a test zone, and a second guard zone are sequentially arranged from an inner side in the inner recordable management zone of the second layer.

4. The information recording medium according to claim 3, **characterized in that**
a radial length of the first guard zone of the first layer is determined based on an allowable value of a positional difference between end positions on outer ends of the emboss management zones of the first layer and the second layer generated by a manufacturing error,
an inner end of the test zone of the second layer is located at a position shifted outward by the allowable value from an inner end of the second guard zone of the first layer, and
an outer end of the test zone of the second layer is located at a position shifted inward by the allowable value from an outer end of the second guard zone of the first layer.

5. The information recording medium according to claim 1, **characterized in that**
the recording layers include a first layer and a second layer,
the information recording medium is set to a drive such that the first layer is nearer to a laser source than the second layer,
a first guard zone, a test zone, and a second guard zone are sequentially arranged from an inner side in the outer recordable management zone of the first layer, and
a first guard zone, a test zone, and a second guard zone are sequentially arranged from an inner side in the outer recordable management zone of the second layer.

6. The information recording medium according to claim 5, **characterized in that**
a radial length of the first guard zone of the second layer is determined based on an allowable value of a positional difference between end positions on outer ends of the data areas of the first layer and the second layer generated by a manufacturing error,
an inner end of the test zone of the first layer is located at a position shifted outward by the allowable value from an inner end of the second guard zone of the second layer, and
an outer end of the test zone of the first layer is located at a position shifted inward by the allowable value from an outer end of the second guard zone of the second layer.

7. The information recording medium according to claim 2, **characterized in that** the management zone includes information representing recording state of the guard zone.

8. The information recording medium according to claim 2, **characterized in that** the management zone includes information representing a range of the data area, and arrangements of the data area, the inner management zone, and the outer management zone is changed by changing the information.

9. An information recording device which records information on a single-sided multilayered information recording medium wherein an emboss management zone, an inner recordable management zone, a data area, and an outer recordable management zone are sequentially arranged from an inner side of each of the recording layers, a burst-cutting area is arranged inward of the emboss management zone in any one of the recording layers, each layer includes at least one of a test zone, a management zone, and a guard zone in at least one of the inner recordable management zone and the inner recordable management zone, and the test zone and the management zone of one of the recording layers overlap the guard zone of another one of the recording layers, the device **characterized by** comprising:

a dummy data recording unit which records dummy data to prevent an interlayer crosstalk in the guard zone;
a test unit which performs test writing in the test zone to optimize a recording waveform;
a data recording unit which records data in the data area; and
a management data recording unit which records management data in the management zone to manage a state of data which is being recorded in the data area.

10. An information recording method which records information on a single-sided multilayered information recording medium wherein an emboss management zone, an inner recordable management zone, a data area, and an outer recordable management zone are sequentially arranged from an inner side of each of the recording layers, a burst-cutting area is arranged inward of the emboss management zone in any one of the recording layers, each layer includes at least one of a test zone, a management zone, and a guard zone in at least one of the inner recordable management zone and the inner recordable management zone, and the test zone and the management zone of one of the recording layers overlap the guard zone of another one of the recording layers, the method **characterized by** comprising:

recording dummy data to prevent an interlayer crosstalk in the guard zone;
performing test writing in the test zone to optimize a recording waveform;
recording data in the data area; and
recording management data in the management zone to manage a state of data which is being recorded in the data area.

**11.** An information reproducing device which reproduces information from a single-sided multilayered information recording medium wherein an emboss management zone, an inner recordable management zone, a data area, and an outer recordable management zone are sequentially arranged from an inner side of each of the recording layers, a burst-cutting area is arranged inward of the emboss management zone in any one of the recording layers, each layer includes at least one of a test zone, a management zone, and a guard zone in at least one of the inner recordable management zone and the inner recordable management zone, and the test zone and the management zone of one of the recording layers overlap the guard zone of another one of the recording layers, the device **characterized by** comprising:

a data access method switching unit;
a determining unit which determines a recording state of the recording layers; and
a control unit which causes the data access method switching unit to switch data access method depending on a determination result of the determining unit.

**12.** An information reproducing method which reproduces information from a single-sided multilayered information recording medium wherein an emboss management zone, an inner recordable management zone, a data area, and an outer recordable management zone are sequentially arranged from an inner side of each of the recording layers, a burst-cutting area is arranged inward of the emboss management zone in any one of the recording layers, each layer includes at least one of a test zone, a management zone, and a guard zone in at least one of the inner recordable management zone and the inner recordable management zone, and the test zone and the management zone of one of the recording layers overlap the guard zone of another one of the recording layers, the method **characterized by** comprising:

a data access method switching step;
a determining step for determining a recording state of the recording layers; and
a control step for causing the data access method switching step to switch data access method depending on a determination result of the determining step.

FIG. 1

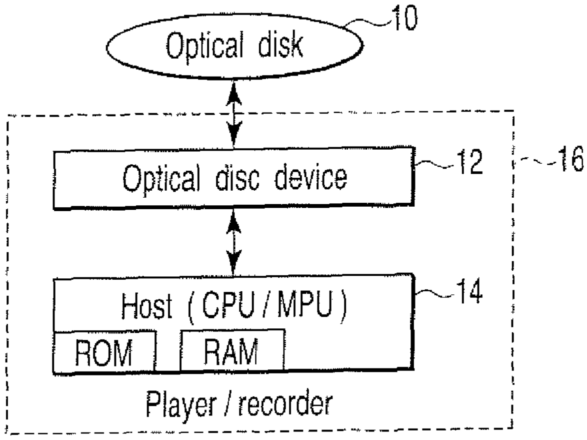


FIG. 2

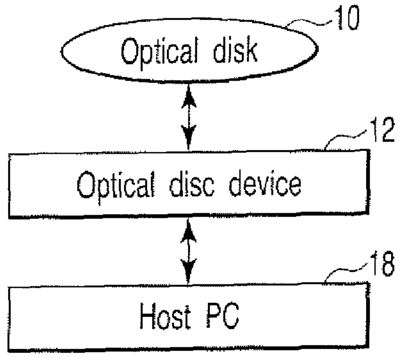


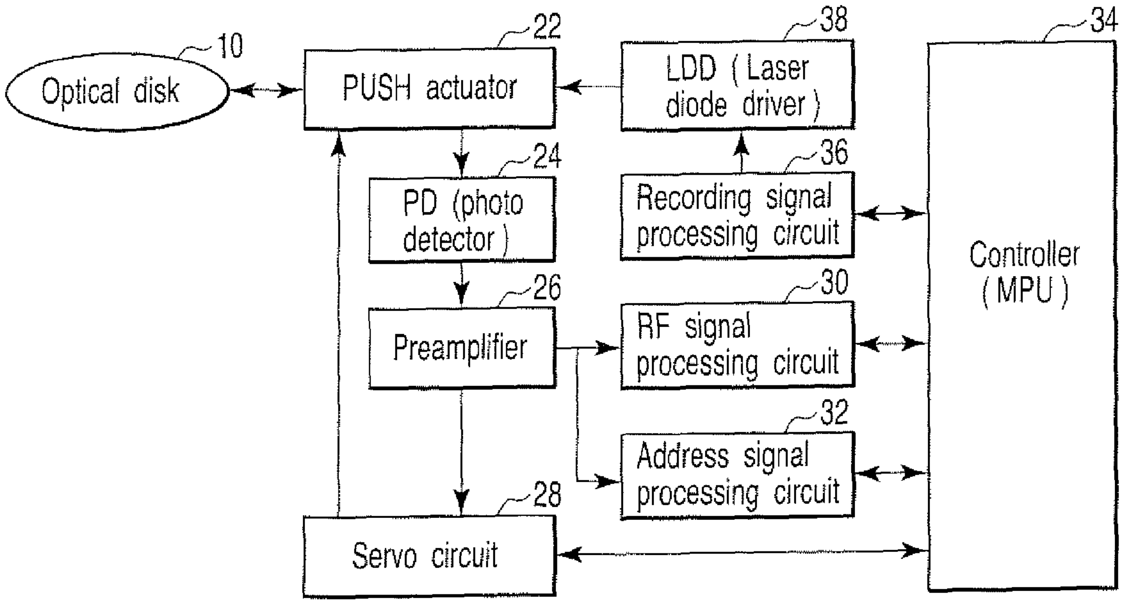


FIG. 3

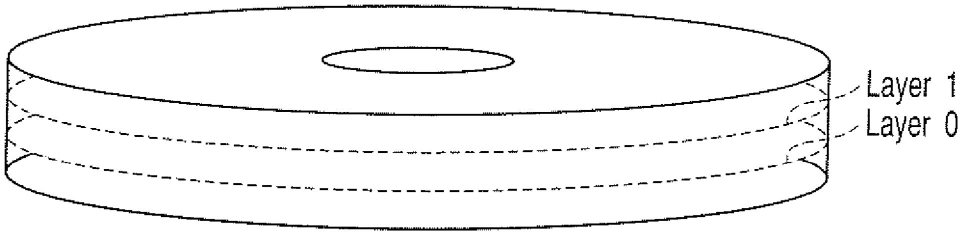


F I G. 4

| Area | Emboss | Rewritable area |
|---|---|---|
| Reference data transfer speed | 18Mbit / sec | 36Mbit / sec |
| Thickness of optical incident side disk substrate | 0.6mm | 0.6mm |
| Track pitch | 0.68 μm | 0.4 μm |
| Shortest mark length | 0.408 μm | 0.204 μm |
| Rotation control method | CLV | CLV |
| Record coding method | ETM | ETM |

F I G. 5

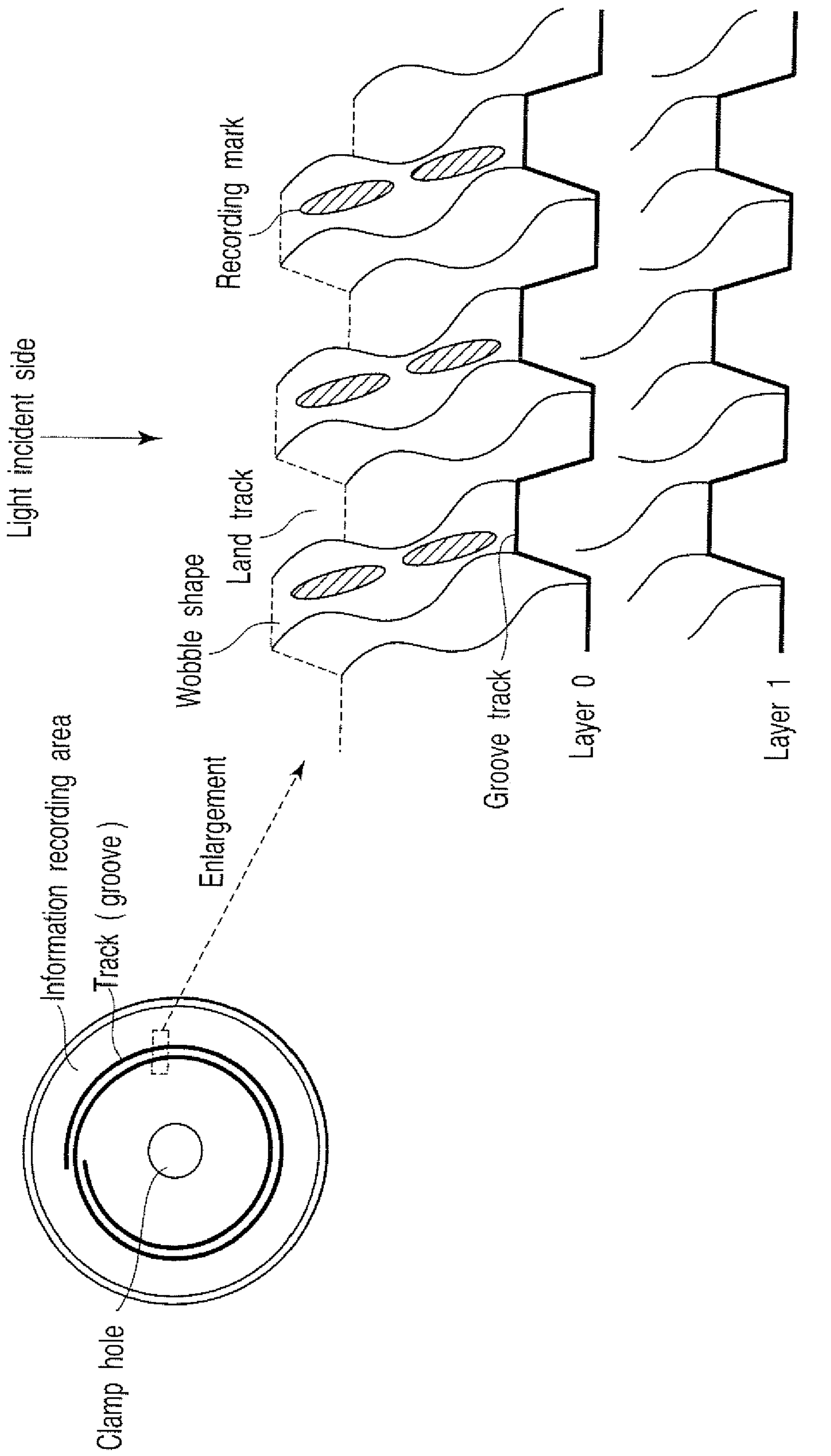
Clamp hole
Information recording area
Track (groove)
Enlargement
Light incident side
Wobble shape
Land track
Recording mark
Groove track
Layer 0
Layer 1

F I G. 6

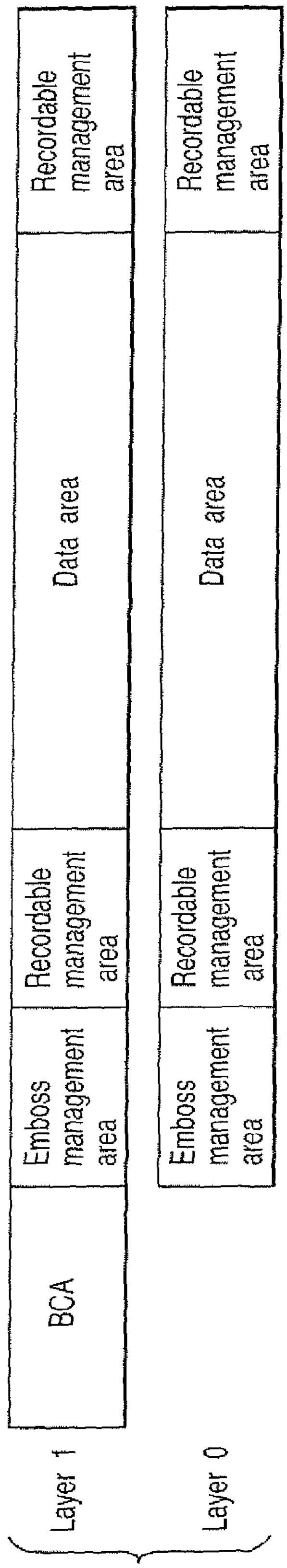
Layer 1
Layer 0
BCA
Emboss management area
Recordable management area
Data area
Recordable management area
Emboss management area
Recordable management area
Data area
Recordable management area

F I G. 7 A

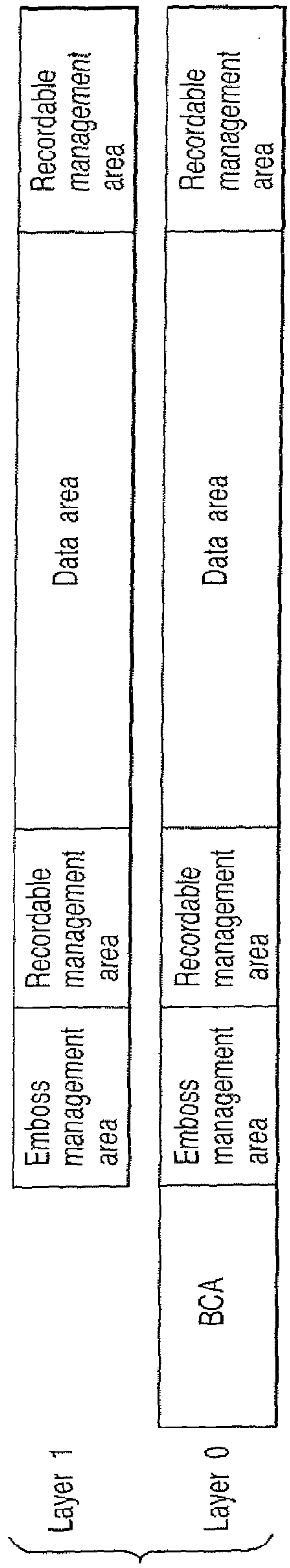
Layer 1
Layer 0
Emboss management area
Recordable management area
Data area
Recordable management area
BCA
Emboss management area
Recordable management area
Data area
Recordable management area

F I G. 7 B

FIG. 8A

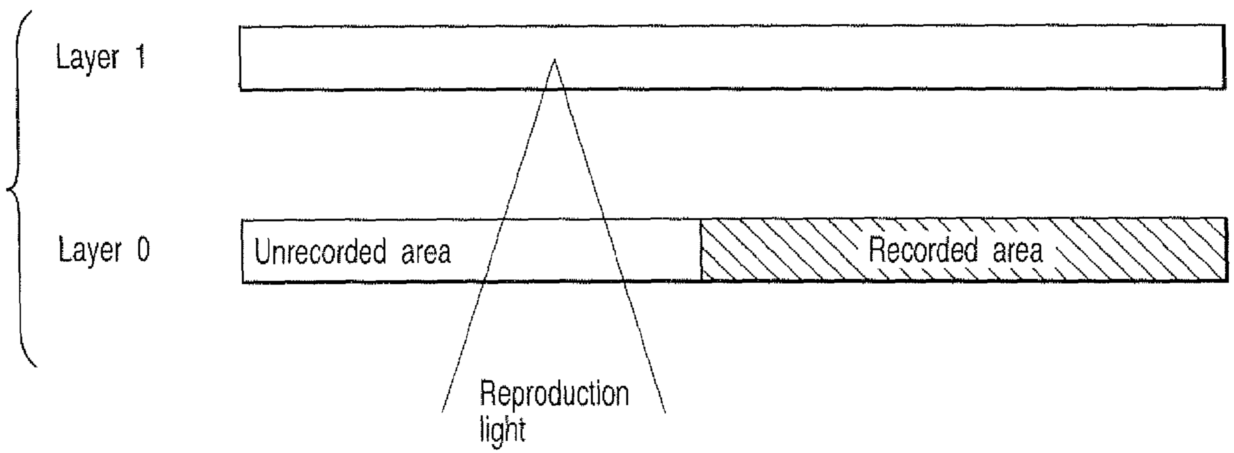
Layer 1
Layer 0
Unrecorded area
Recorded area
Reproduction light

FIG. 8B

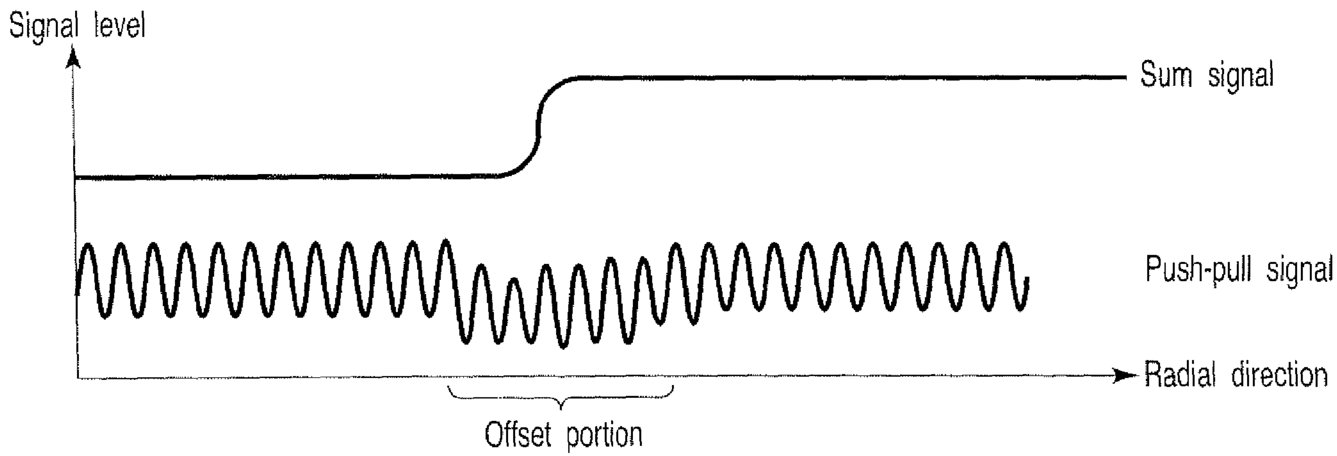
Signal level
Sum signal
Push-pull signal
Radial direction
Offset portion

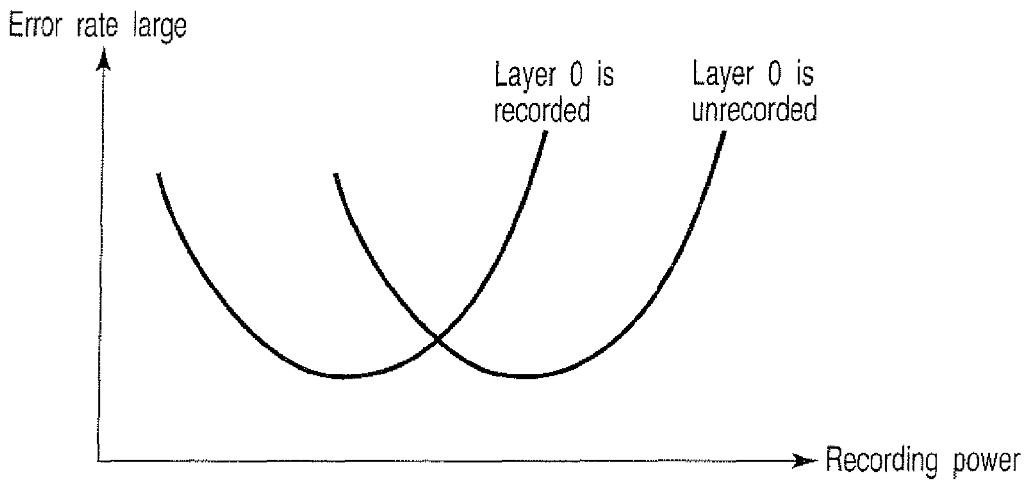
Error rate large
Layer 0 is recorded
Layer 0 is unrecorded
Recording power

FIG.9

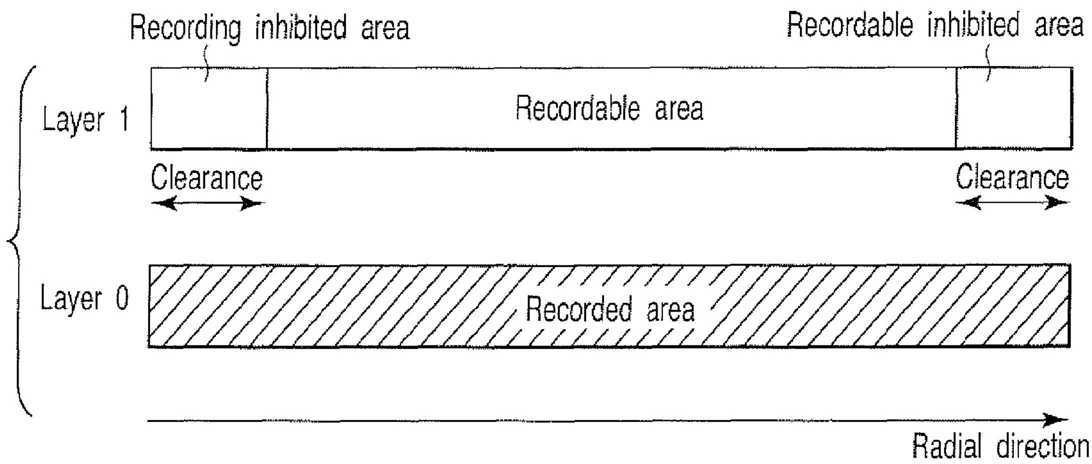
Recording inhibited area
Recordable inhibited area
Layer 1
Recordable area
Clearance
Clearance
Layer 0
Recorded area
Radial direction

FIG.10

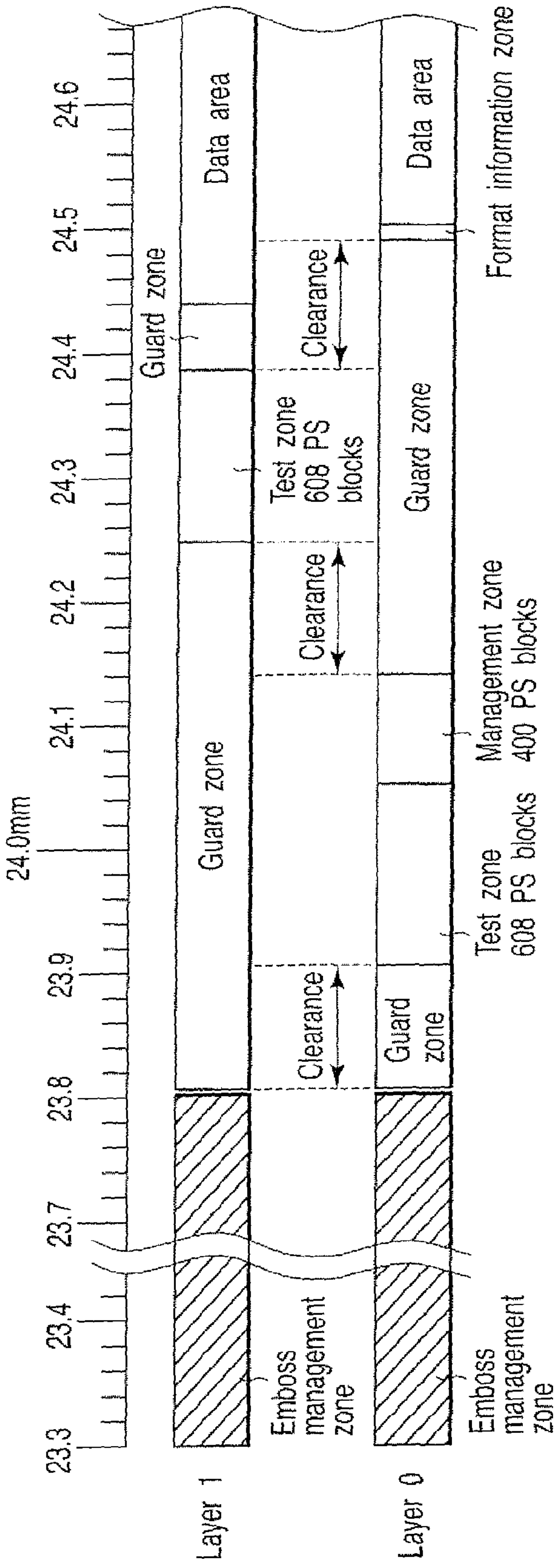

24.0mm
23.3
23.4
23.7
23.8
23.9
24.1
24.2
24.3
24.4
24.5
24.6
Layer 1
Layer 0
Guard zone
Data area
Clearance
Test zone 608 PS blocks
Management zone 400 PS blocks
Emboss management zone
Format information zone


FIG. 11

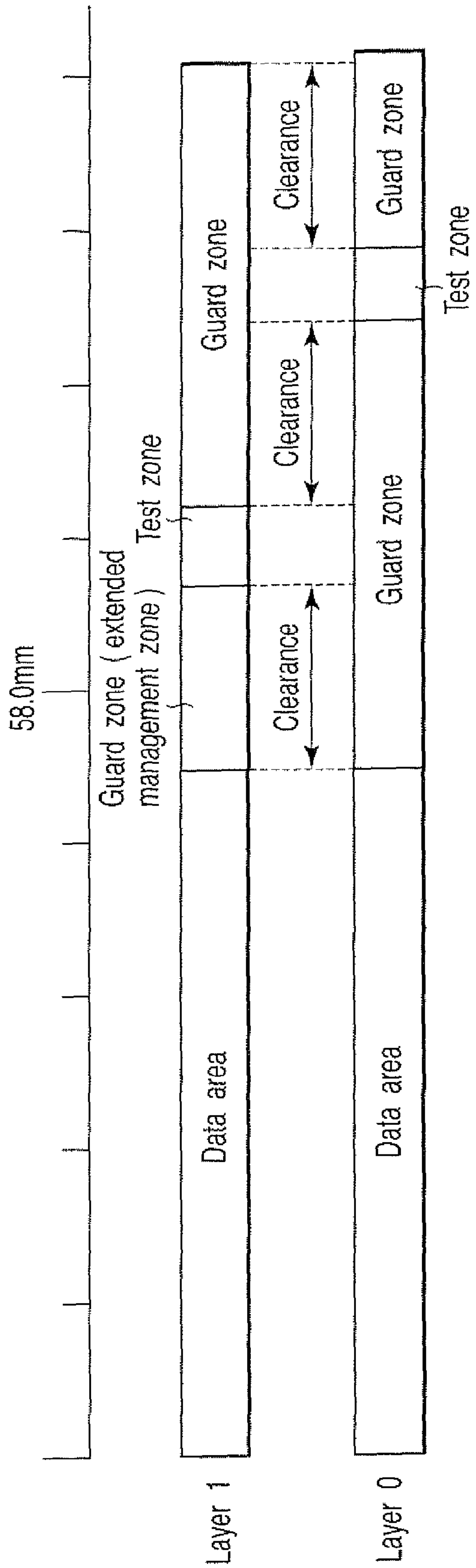
58.0mm
Layer 1
Layer 0
Data area
Data area
Guard zone ( extended management zone )
Test zone
Guard zone
Clearance
Clearance
Clearance
Guard zone
Test zone
Guard zone

FIG.12

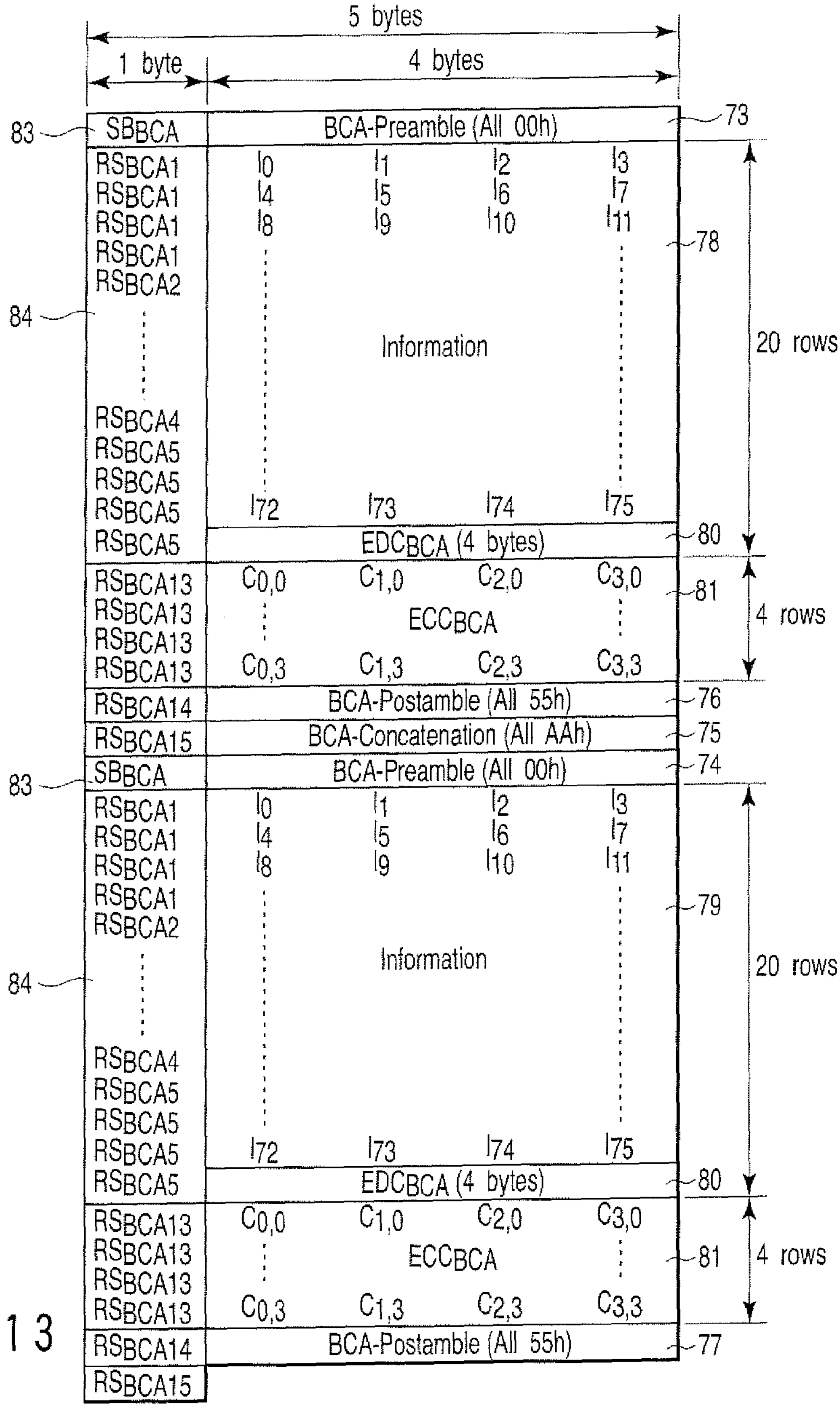
5 bytes
1 byte
4 bytes
SBBCA
BCA-Preamble (All 00h)
RSBCA1
RSBCA2
RSBCA4
RSBCA5
Information
EDCBCA (4 bytes)
RSBCA13
ECCBCA
RSBCA14
BCA-Postamble (All 55h)
RSBCA15
BCA-Concatenation (All AAh)
20 rows
4 rows
73
74
75
76
77
78
79
80
81
83
84

FIG. 13

BCA record format

| | |
|---|---|
| 2bytes | BCA record ID |
| 1byte | Version number |
| 1byte | Data length |
| 1byte | Book type / disc type |
| 1byte | Extended part version |
| 1byte | Extended disc type |
| 1byte | Reserved |

FIG. 14

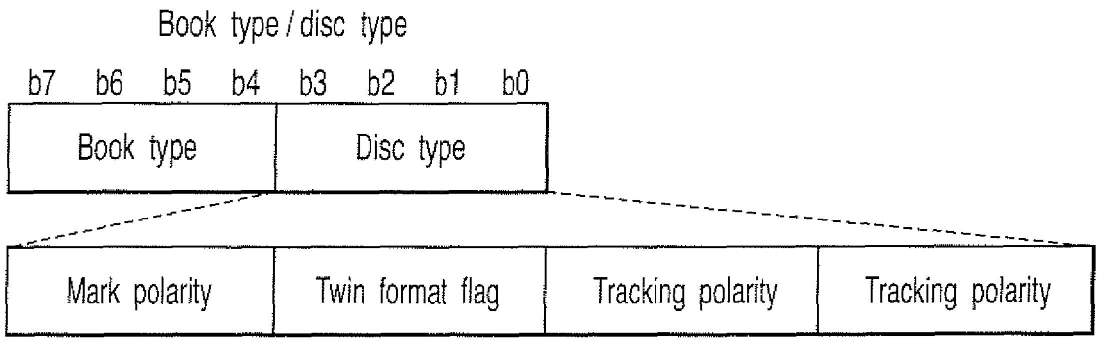


FIG.15

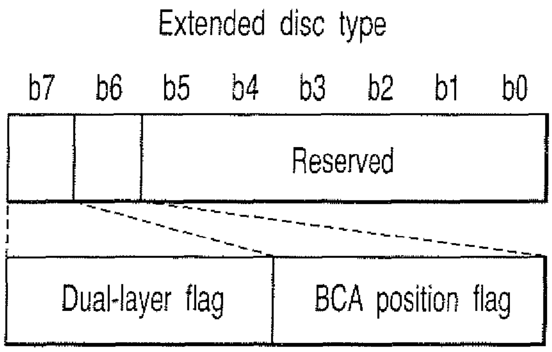


FIG.16

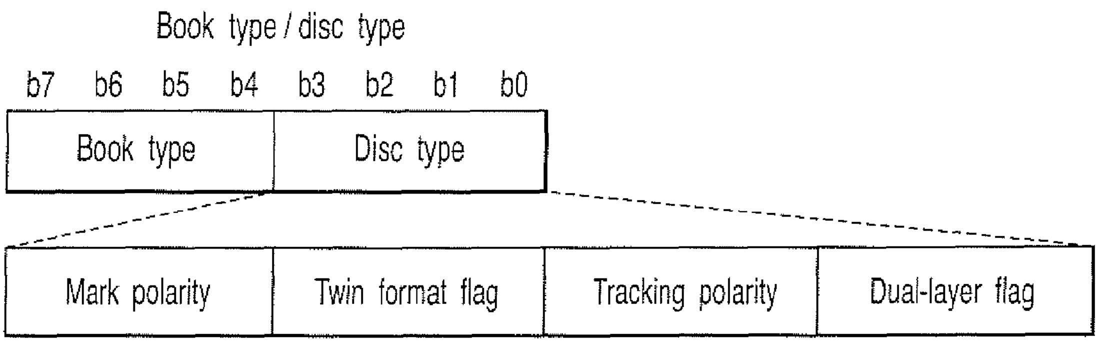


FIG.17

Physical fromat information

| Byte position | Contents | Number of bytes |
|---|---|---|
| 0 | Book type and Part version | 1 |
| 1 | Disc size and maximum transfer rate of the disc | 1 |
| 2 | Disc structure | 1 |
| 3 | Recording density | 1 |
| 4-15 | Data area allocation | 12 |
| 16 | BCA descriptor | 1 |
| 17-26 | ID information of recordable recording speed | 10 |
| 27 | Extended Part version | 1 |
| 28-31 | Reserved | 4 |
| 32 | Actual number of maximum reading speed | 1 |
| 33 | Layer format table | 1 |
| 34-127 | Reserved | 94 |
| 128 | Mark polarity descriptor | 1 |
| 129 | Velocity | 1 |
| 130 | Rim intensity in tangential direction | 1 |
| 131 | Rim intensity in radial direction | 1 |
| 132 | Read power | 1 |
| 133-148 | Actual number of recording speed | 16 |
| 149 | Reflectivity of Data area for Layer 0 | 1 |
| 150 | Push-pull signal for Layer 0 | 1 |
| 151 | On track signal for Layer 0 | 1 |
| 152 | Reflectivity of Data area for Layer 1 | 1 |
| 153 | Push-pull signal for Layer 1 | 1 |
| 154 | On track signal for Layer 1 | 1 |
| 155-511 | Reserved | 357 |
| 512-539 | Write pulse information for layer 0 | 28 |
| 540-567 | Write pulse information for layer 1 | 28 |
| 568-2047 | Reserved | 1480 |

FIG.18

Data area allocation

| Byte position | Contents | Number of bytes |
|---|---|---|
| 4 | 00h | 1 |
| 5-7 | Start PSN of the Data area ( 04 0000h ) | 3 |
| 8 | 00h | 1 |
| 9-11 | Maximum PSN of Data Recordable area ( FB CCFFh ) | 3 |
| 12 | 00h | 1 |
| 13-15 | End PSN on Layer 0 ( 73 DBFFh ) | 3 |

F I G. 1 9

Physical fromat information

| Byte position | Contents | Number of bytes |
|---|---|---|
| 0 | Book type and Part version | 1 |
| 1 | Disc size and maximum transfer rate of the disc | 1 |
| 2 | Disc structure | 1 |
| 3 | Recording density | 1 |
| 4-15 | Data area allocation | 12 |
| 16 | BCA descriptor | 1 |
| 17-26 | ID information of recordable recording speed | 10 |
| 27 | Extended Part version | 1 |
| 28-31 | Reserved | 4 |
| 32 | Actual number of maximum reading speed | 1 |
| 33 | Layer format table | 1 |
| 34-127 | Reserved | 94 |
| 128 | Mark polarity descriptor | 1 |
| 129 | Velocity | 1 |
| 130 | Rim intensity in tangential direction | 1 |
| 131 | Rim intensity in radial direction | 1 |
| 132 | Read power | 1 |
| 133-148 | Actual number of recording speed | 16 |
| 149 | Reflectivity of Data area for Layer 0 | 1 |
| 150 | Push-pull signal for Layer 0 | 1 |
| 151 | On track signal for Layer 0 | 1 |
| 152 | Reflectivity of Data area for Layer 1 | 1 |
| 153 | Push-pull signal for Layer 1 | 1 |
| 154 | On track signal for Layer 1 | 1 |
| 155-255 | Reserved | 101 |
| 256-263 | Start PSN of border zone | 8 |
| 264-511 | Reserved | 248 |
| 512-539 | Write pulse information for layer 0 | 28 |
| 540-567 | Write pulse information for layer 1 | 28 |
| 568-2047 | Reserved | 1480 |

F I G. 20

Data area allocation

| Byte position | Contents | Number of bytes |
|---|---|---|
| 4 | 00h | 1 |
| 5-7 | Start PSN of the Data area (04 0000h) | 3 |
| 8 | 00h | 1 |
| 9-11 | Last recorded PSN of last R zone | 3 |
| 12 | 00h | 1 |
| 13-15 | End PSN on Layer 0 | 3 |

FIG.21

Start PSN of boarder zone

| Byte position | Contents | Number of bytes |
|---|---|---|
| 256-259 | Start PSN of the boarder-out of 1st boarder zone | 4 |
| 260-263 | Start PSN of the boarder-in of 2nd boarder zone | 4 |

FIG.22

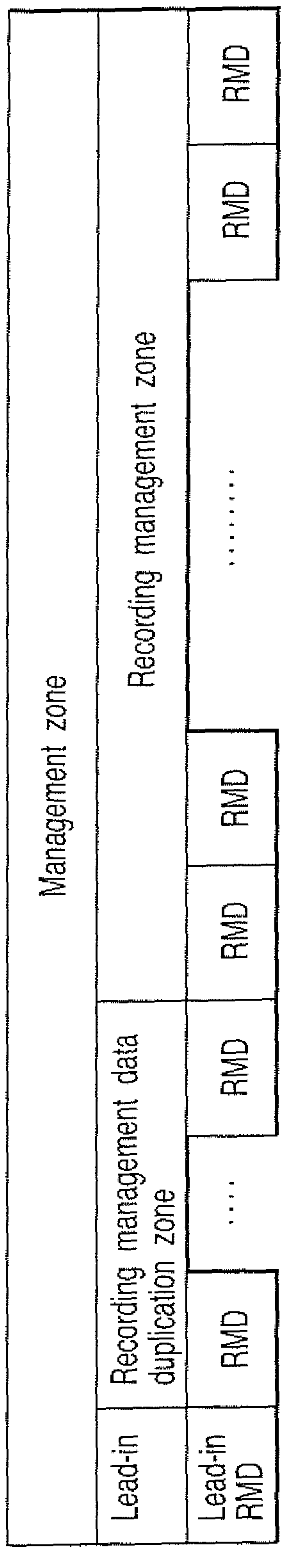
Management zone
Lead-in
Recording management data duplication zone
Recording management zone
Lead-in RMD
RMD
....
RMD
RMD
RMD
........
RMD
RMD

F I G. 2 3

Lead-in RMD

| Byte position | Contents |
|---|---|
| 0-31 | Drive manufacturer ID |
| 32-39 | Reserved |
| 40-55 | Serial Number |
| 56-63 | Reserved |
| 64-79 | Model Number |
| 80-87 | Reserved |
| 88-105 | Unique Disc ID |
| 106-2047 | Reserved |

FIG. 24

RMD

| |
|---|
| Reserved |
| Filed 0 |
| Filed 1 |
| Filed 2 |
| Filed 3 |
| ⋮ |
| Filed 31 |

FIG. 25

RMD Field 0

| Byte position | Contents | Number of bytes |
|---|---|---|
| 0-1 | RMD format | 2 |
| 2 | Disc status | 1 |
| 3 | Reserved | 1 |
| 4-21 | Unique Disc ID | 18 |
| 22-33 | Data area allocation | 12 |
| 34-45 | Renewed Data area allocation 1 | 12 |
| 46-93 | Drive test zone allocation | 48 |
| 94-2047 | Reserved | 1954 |

FIG.26

Disc state

| b7 | b6 | b5 | b4 | b3 | b2 | b1 | b0 |
|---|---|---|---|---|---|---|---|
| Padding status | | | | Finalize information | | | |

Finalize information
0h...Disc is unrecorded
1h...Disc is finalized with 1 border
2h...Data is recorded on disc, and disc is not finalized
3h...Disc is finalized
Other...Reserved

Padding status
0h...Guard zone of layer 0 is unrecorded
1h...Guard zone of layer 0 is recorded
Other...Reserved

FIG.27

Data area allocation

| Byte position | Contents | Number of bytes |
|---|---|---|
| 22 | Reserved | 1 |
| 23-25 | Start PSN of the Data area ( 04 0000h ) | 3 |
| 26 | Reserved | 1 |
| 27-29 | Maximum PSN of Data Recordable area ( FB CCFFh ) | 3 |
| 30 | Reserved | 1 |
| 31-33 | End PSN on Layer 0 ( 73 DBFFh ) | 3 |

FIG.28

Renewed Data area allocation

| Byte position | Contents | Number of bytes |
|---|---|---|
| 34 | Renewal descriptor | 1 |
| 35-37 | Start PSN of the Data area ( 04 0000h ) | 3 |
| 38 | Reserved | 1 |
| 39-41 | Maximum PSN of Data Recordable area | 3 |
| 42 | Reserved | 1 |
| 43-45 | End PSN on Layer 0 | 3 |

FIG. 29

Drive test zone allocation

| Byte position | Contents | Number of bytes |
|---|---|---|
| 50-55 | Start PSN of inner Drive test zone on Layer 0 ( 03 8100h ) | 4 |
| 56-59 | Size of inner Drive test zone on Layer 0 ( 4B00h ) | 4 |
| 60-63 | Start PSN of the inner Drive test zone on Layer 1 ( FC E600h ) | 4 |
| 64-67 | Size of inner Drive test zone on Layer 1 ( 4B00h ) | 4 |
| 68-71 | Start PSN of the outer Drive test zone on Layer 0 ( 75 1000h ) | 4 |
| 72-75 | Size of outer Drive test zone on Layer 0 ( 3C00h ) | 4 |
| 76-79 | Start PSN of the outer Drive test zone on Layer 1 ( 8B 6F00h ) | 4 |
| 80-83 | Size of outer Drive test zone on Layer 1 ( 3C00h ) | 4 |
| 84-87 | Start PSN of Extra Drive test zone on Layer 0 | 4 |
| 88-91 | Size of Extra Drive test zone on Layer 0 ( 3C00h ) | 4 |
| 92-95 | Start PSN of Extra Drive test zone on Layer 1 | 4 |
| 96-99 | Size of Extra Drive test zone on Layer 1 ( 3C00h ) | 4 |

FIG. 30

RMD Field 1

| Byte position | | Contents | Number of bytes |
|---|---|---|---|
| 0-31 | #1 | Drive manufacturer ID | 32 |
| 32-47 | | Serial number | 16 |
| 48-63 | | Model number | 16 |
| 64-71 | | Time stamp | 8 |
| 72-75 | | Inner Drive test zone address for Layer 0 | 4 |
| 76-79 | | Outer Drive test zone address for Layer 0 | 4 |
| 80-103 | | Running OPC information | 24 |
| 104-105 | | DSV | 2 |
| 106 | | Test zone usage descriptor | 1 |
| 107 | | Reserved | 1 |
| 108-111 | | Inner Drive test zone address for Layer 1 | 4 |
| 112-115 | | Outer Drive test zone address for Layer 1 | 4 |
| 116-119 | | Extra Drive test zone address for Layer 0 | 4 |
| 120-123 | | Extra Drive test zone address for Layer 1 | 4 |
| 124-127 | | Reserved | 4 |
| 128-191 | | Drive specific data | 64 |
| 192-255 | | Reserved | 64 |
| 256-287 | #2 | Drive manufacturer ID | 32 |
| 288-303 | | Serial number | 16 |
| 304-319 | | Model number | 16 |
| 320-327 | | Time stamp | 8 |
| 328-331 | | Inner Drive test zone address for Layer 0 | 4 |
| 332-335 | | Outer Drive test zone address for Layer 0 | 4 |
| 336-359 | | Running OPC information | 24 |
| 360-361 | | DSV | 2 |
| 362 | | Test zone usage descriptor | 1 |
| 363 | | Reserved | 1 |
| 364-367 | | Inner Drive test zone address for Layer 1 | 4 |
| 368-371 | | Outer Drive test zone address for Layer 1 | 4 |
| 372-375 | | Extra Drive test zone address for Layer 0 | 4 |
| 376-379 | | Extra Drive test zone address for Layer 1 | 4 |
| 380-383 | | Reserved | 4 |
| 384-447 | | Drive specific data | 64 |
| 448-511 | | Reserved | 64 |
| 512-543 | #3 | Drive manufacturer ID | 32 |

FIG.31A

| | | | |
|---|---|---|---|
| 448-511 | | Reserved | 64 |
| 512-543 | | Drive manufacturer ID | 32 |
| 544-559 | | Serial number | 16 |
| 560-575 | | Model number | 16 |
| 576-583 | | Time stamp | 8 |
| 584-587 | | Inner Drive test zone address for Layer 0 | 4 |
| 588-591 | | Outer Drive test zone address for Layer 0 | 4 |
| 592-615 | | Running OPC information | 24 |
| 616-617 | | DSV | 2 |
| 618 | #3 | Test zone usage descriptor | 1 |
| 619 | | Reserved | 1 |
| 620-623 | | Inner Drive test zone address for Layer 1 | 4 |
| 624-627 | | Outer Drive test zone address for Layer 1 | 4 |
| 628-631 | | Extra Drive test zone address for Layer 0 | 4 |
| 632-635 | | Extra Drive test zone address for Layer 1 | 4 |
| 636-639 | | Reserved | 4 |
| 640-703 | | Drive specific data | 64 |
| 704-767 | | Reserved | 64 |
| 768-799 | | Drive manufacturer ID | 32 |
| 800-815 | | Serial number | 16 |
| 816-831 | | Model number | 16 |
| 832-839 | | Time stamp | 8 |
| 840-843 | | Inner Drive test zone address for Layer 0 | 4 |
| 844-847 | | Outer Drive test zone address for Layer 0 | 4 |
| 848-871 | | Running OPC information | 24 |
| 872-873 | | DSV | 2 |
| 874 | #4 | Test zone usage descriptor | 1 |
| 875 | | Reserved | 1 |
| 876-879 | | Inner Drive test zone address for Layer 1 | 4 |
| 880-883 | | Outer Drive test zone address for Layer 1 | 4 |
| 884-887 | | Extra Drive test zone address for Layer 0 | 4 |
| 888-891 | | Extra Drive test zone address for Layer 1 | 4 |
| 892-895 | | Reserved | 4 |
| 896-959 | | Drive specific data | 64 |
| 960-1023 | | Reserved | 64 |
| 1024-1279 | #1 | Drive specific data | 256 |
| 1280-1535 | #2 | Drive specific data | 256 |
| 1536-1791 | #3 | Drive specific data | 256 |
| 1792-2047 | #4 | Drive specific data | 256 |

FIG. 31B

RMD Field 3

| Byte position | Contents | Number of bytes |
|---|---|---|
| 0-3 | Start PSN of border-out of 1st border zone | 4 |
| 4-7 | Start PSN of border-out of 2nd border zone | 4 |
| 8-11 | Start PSN of border-out of 3rd border zone | 4 |
| | : | |
| 508-511 | Start PSN of border-out of 128th border zone | 4 |
| 512-513 | Management zone number ( currently used ) | 2 |
| 514-527 | Reserved | 14 |
| 528-531 | Start PSN of extended management zone #1 | 4 |
| 532-535 | Size of extended management zone #1 | 4 |
| 536-539 | Start PSN of extended management zone #2 | 4 |
| 540-543 | Size of extended management zone #2 | 4 |
| | : | |
| 1544-1599 | Reserved | 56 |
| 1600-1601 | Extended test zone number ( currently used ) | 2 |
| 1602-1615 | Reserved | 14 |
| 1616-1619 | Start PSN of extended test zone #1 | 4 |
| 1620-1623 | End PSN of extended test zone #1 | 4 |
| 1624-1627 | Start PSN of extended test zone #2 | 4 |
| 1628-1631 | End PSN of extended test zone #2 | 4 |
| 1632-2047 | Reserved | 416 |

F I G. 3 2

RMD Field 4

| Byte position | Contents | Number of bytes |
|---|---|---|
| 0-1 | Invisible RZone number | 2 |
| 2-3 | First Open RZone number | 2 |
| 4-5 | Second Open RZone number | 2 |
| 6-15 | Reserved | 10 |
| 16-19 | Start PSN of RZone #1 | 4 |
| 20-23 | Last recorded PSN of RZone #1 | 4 |
| 24-27 | Start PSN of RZone #2 | 4 |
| 28-31 | Last recorded PSN of RZone #2 | 4 |
| : | : | : |
| 2040-2043 | Start PSN of RZone #254 | 4 |
| 2044-2047 | Last recorded PSN of RZone #254 | 4 |

FIG. 33A

RMD Field 5 to Field 21

| Byte position | Contents | Number of bytes |
|---|---|---|
| 0-3 | Start PSN of RZone #n | 4 |
| 4-7 | Last recorded PSN of RZone #n | 4 |
| 8-11 | Start PSN of RZone #n+1 | 4 |
| 12-15 | Last recorded PSN of RZone #n+1 | 4 |
| : | : | : |
| 2044-2047 | Last recorded PSN of RZone #n+255 | 4 |

FIG. 33B

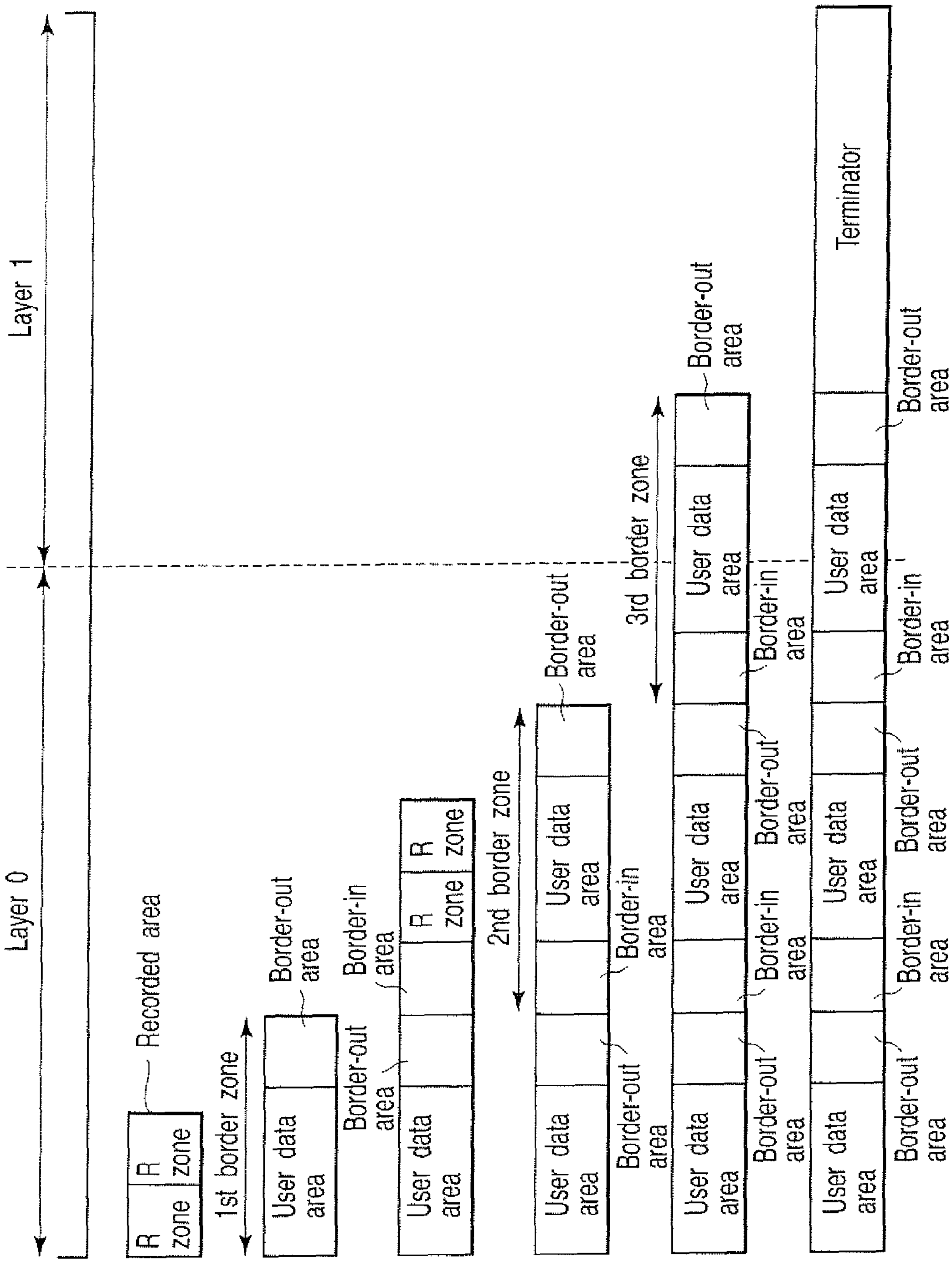


FIG. 34A

FIG. 34B

FIG. 34C

FIG. 34D

FIG. 34E

FIG. 34F

FIG. 35A

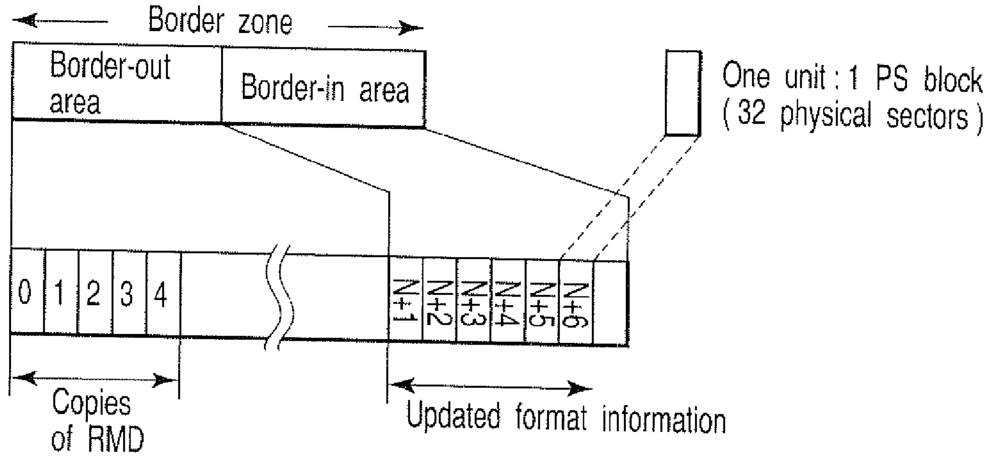


| | | | | |
|---|---|---|---|---|
| Layer 0 | Start physical sector number of border-out area | 05FE00h – 1E0DFFh | 1E0E00h – 421BFFh | 421C00h – 73DBFFh |
| | Size of border-out area | 290 PS blocks | 380 PS blocks | 480 PS blocks |
| Layer 1 | Start physical sector number of border-out area | 8C2400h – BDE3FFh | BDE400h – E1F1FFh | E1F200h – FA01FFh |
| | Size of border-out area | 480 PS blocks | 380 PS blocks | 290 PS blocks |

PS blocks = 32 × physical sectors

FIG. 35B

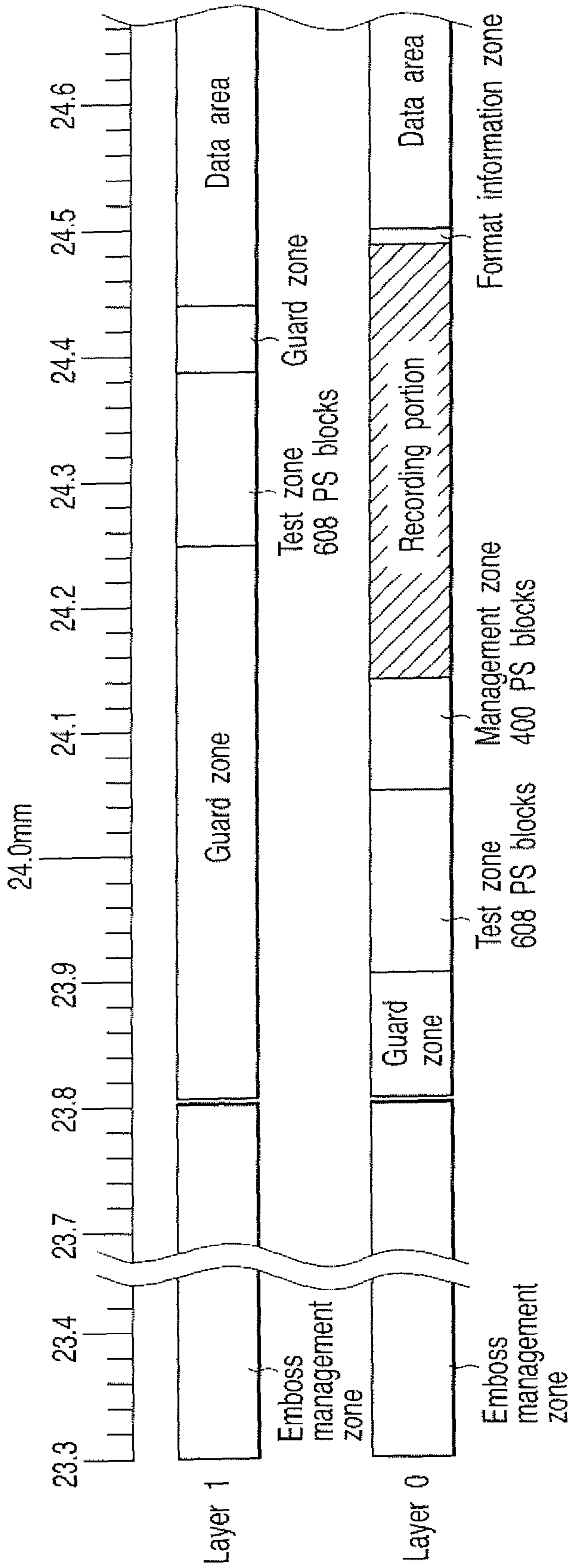
24.0mm
23.3
23.4
23.7
23.8
23.9
24.1
24.2
24.3
24.4
24.5
24.6
Layer 1
Layer 0
Data area
Guard zone
Test zone
608 PS blocks
Guard zone
Emboss
management
zone
Data area
Format information zone
Recording portion
Management zone
400 PS blocks
Test zone
608 PS blocks
Guard
zone
Emboss
management
zone

FIG. 36

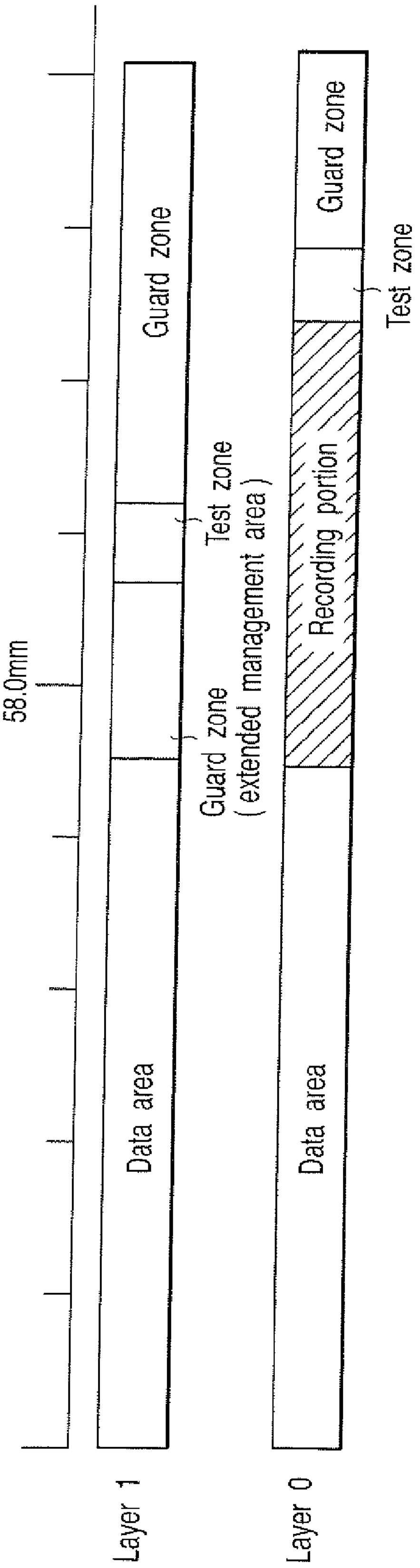
58.0mm
Guard zone
Test zone
Guard zone
(extended management area)
Data area
Guard zone
Test zone
Recording portion
Data area
Layer 1
Layer 0

F I G. 3 7

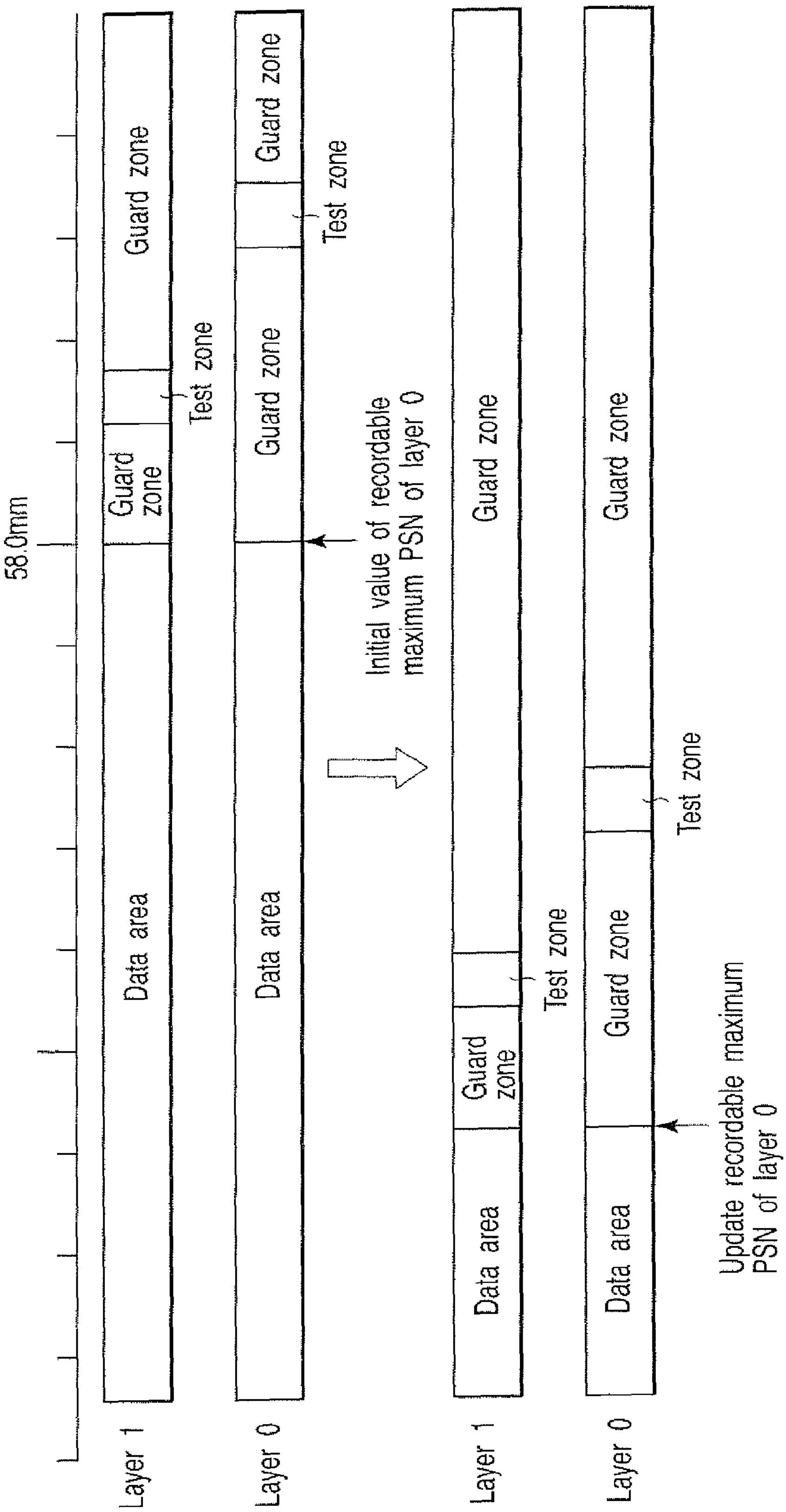
58.0mm
Layer 1
Layer 0
Data area
Guard zone
Test zone
Guard zone
Data area
Test zone
Guard zone
Guard zone
Initial value of recordable maximum PSN of layer 0
Layer 1
Layer 0
Data area
Guard zone
Test zone
Guard zone
Data area
Guard zone
Test zone
Guard zone
Update recordable maximum PSN of layer 0

F I G. 3 8

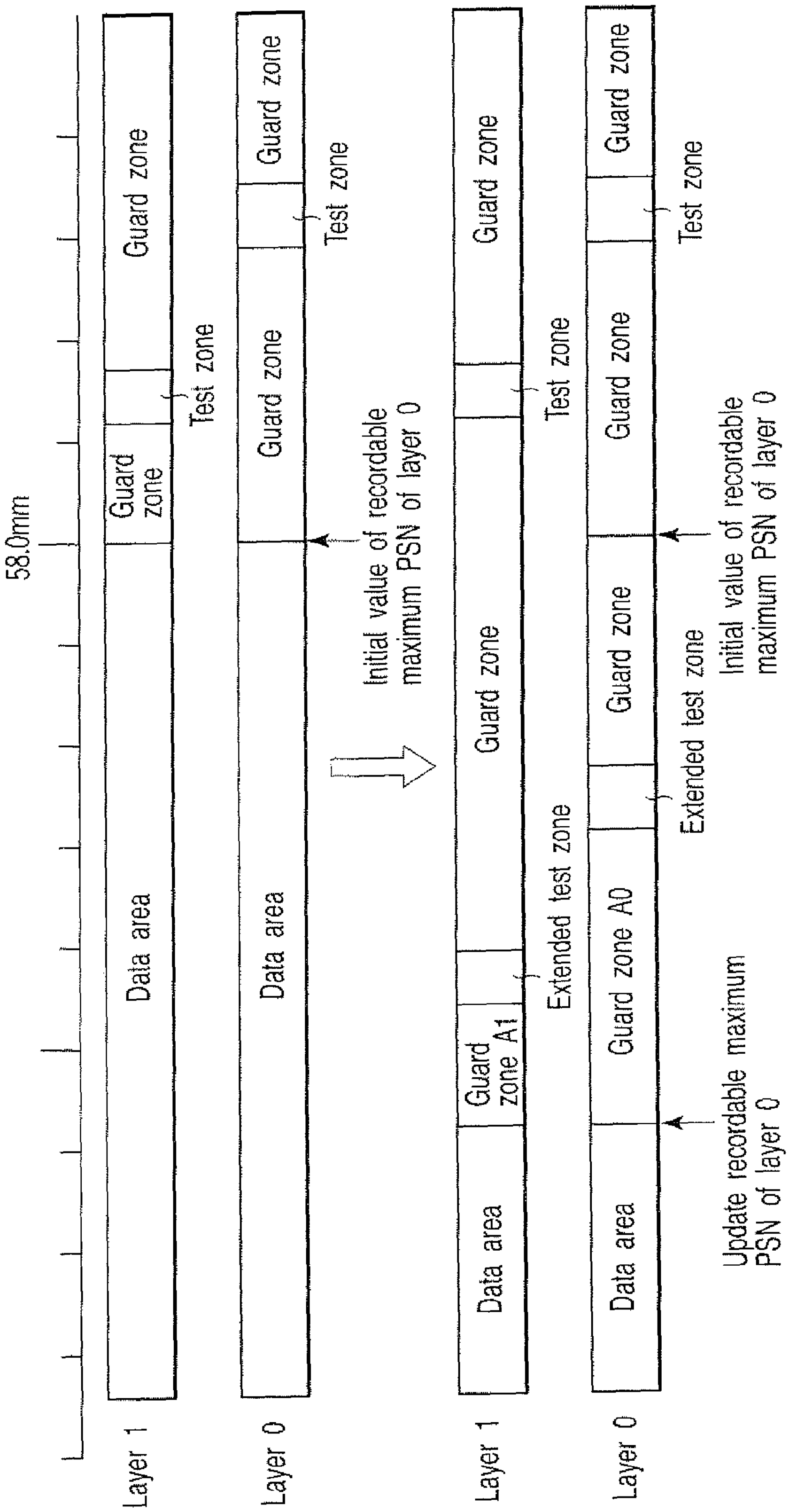
58.0mm
Layer 1
Layer 0
Data area
Guard zone
Test zone
Initial value of recordable maximum PSN of layer 0
Guard zone A1
Extended test zone
Guard zone A0
Update recordable maximum PSN of layer 0

FIG. 39

| Number of update maximum recordable PSN | | 05FE00h-1E0DFFh | 1E0E00h-421BFFh | 421C00h- ------- |
|---|---|---|---|---|
| L0 | Guard zone | 1696 | 2064 | 2464 |
| | Test zone | 480 | 480 | 480 |
| L1 | Guard zone | 624 | 816 | 1016 |
| | Test zone | 480 | 480 | 480 |

FIG.40

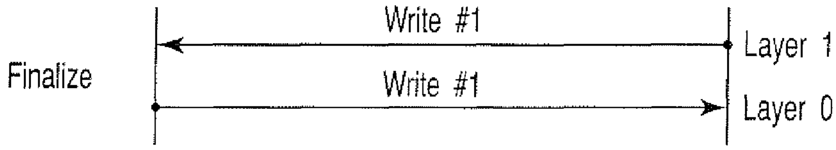


FIG.41A

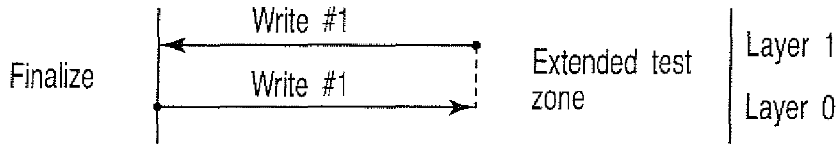


FIG.41B

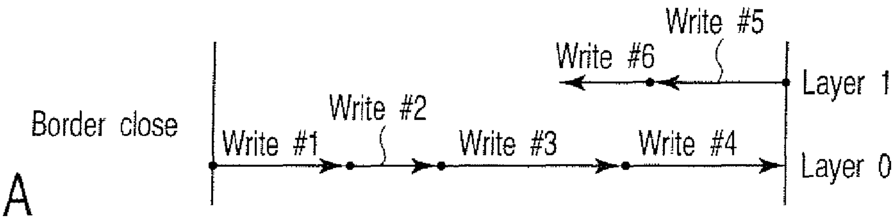


FIG.42A

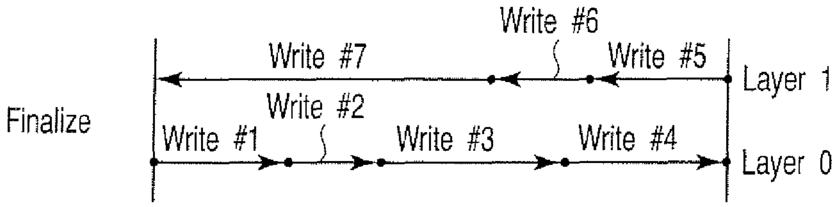


FIG.42B

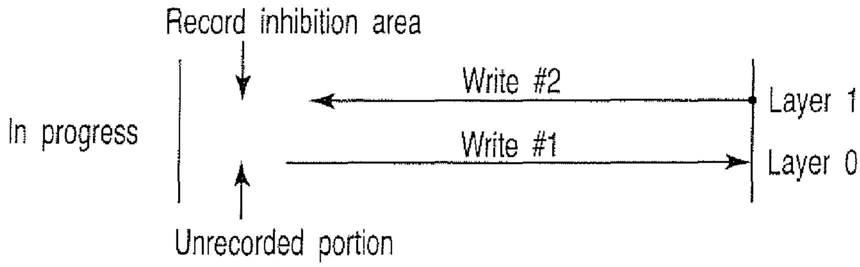


FIG.43A

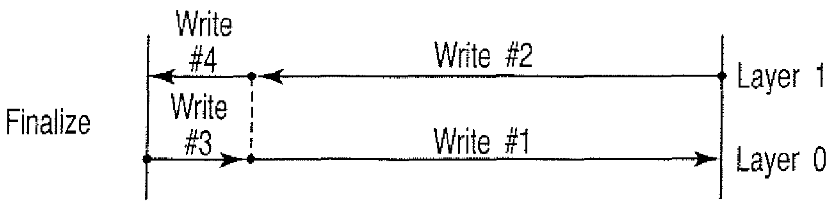


FIG.43B

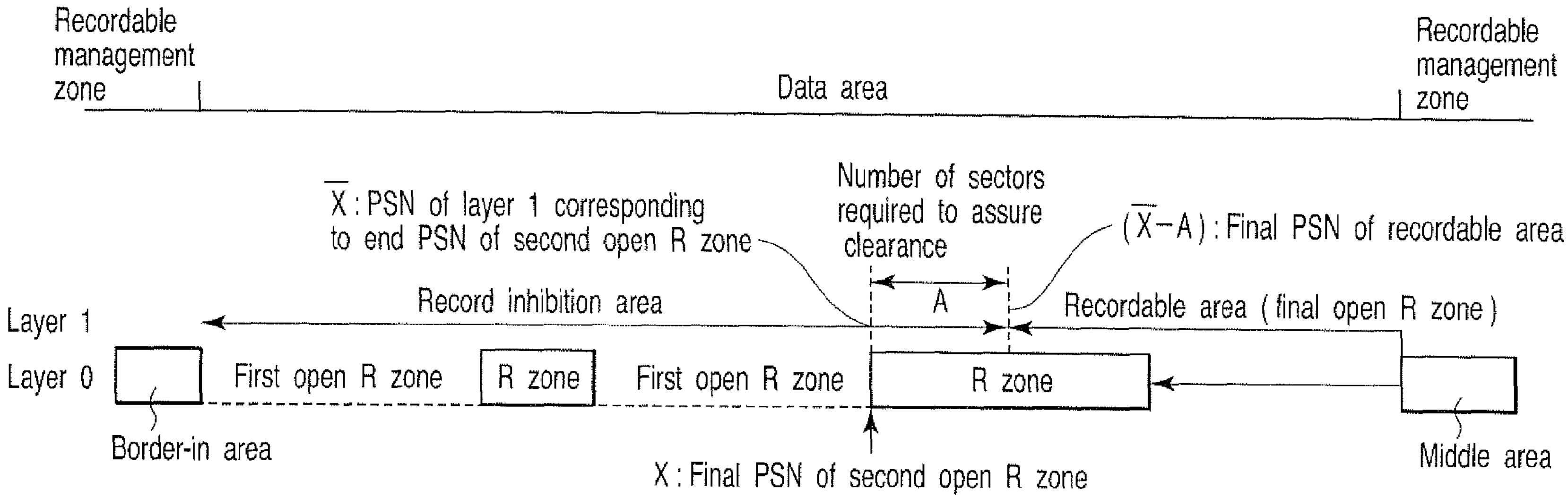


F I G. 4 4 A

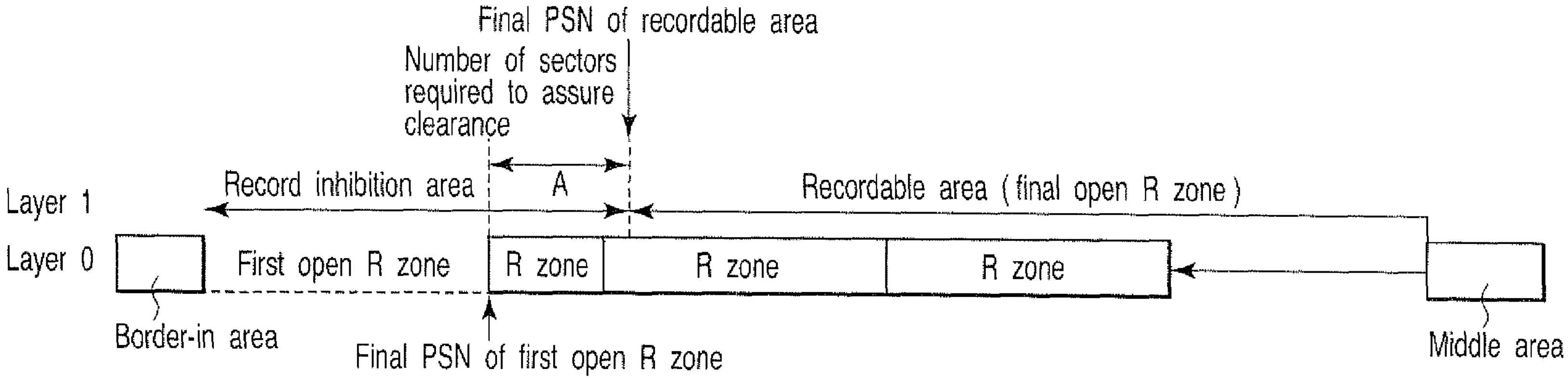


F I G. 4 4 B

| Final PSN of outermost circumference open R zone | | Radius (mm) | | A |
|---|---|---|---|---|
| 040000h | 0709FFh | 24 | 26 | 3900h |
| 070A00h | 1684FFh | 26 | 32 | 4800h |
| 168500h | 296FFFh | 32 | 39 | 5600h |
| 297000h | 3FCAFFh | 39 | 45 | 6400h |
| 3FCB00h | 5995FFh | 45 | 52 | 7200h |
| 599600h | | 52 | | 7F00h |

FIG.45

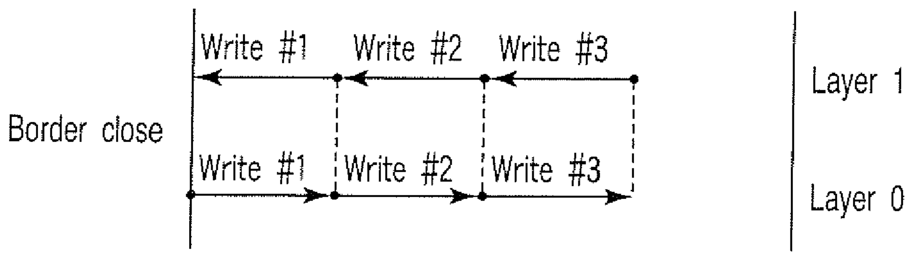


FIG.46

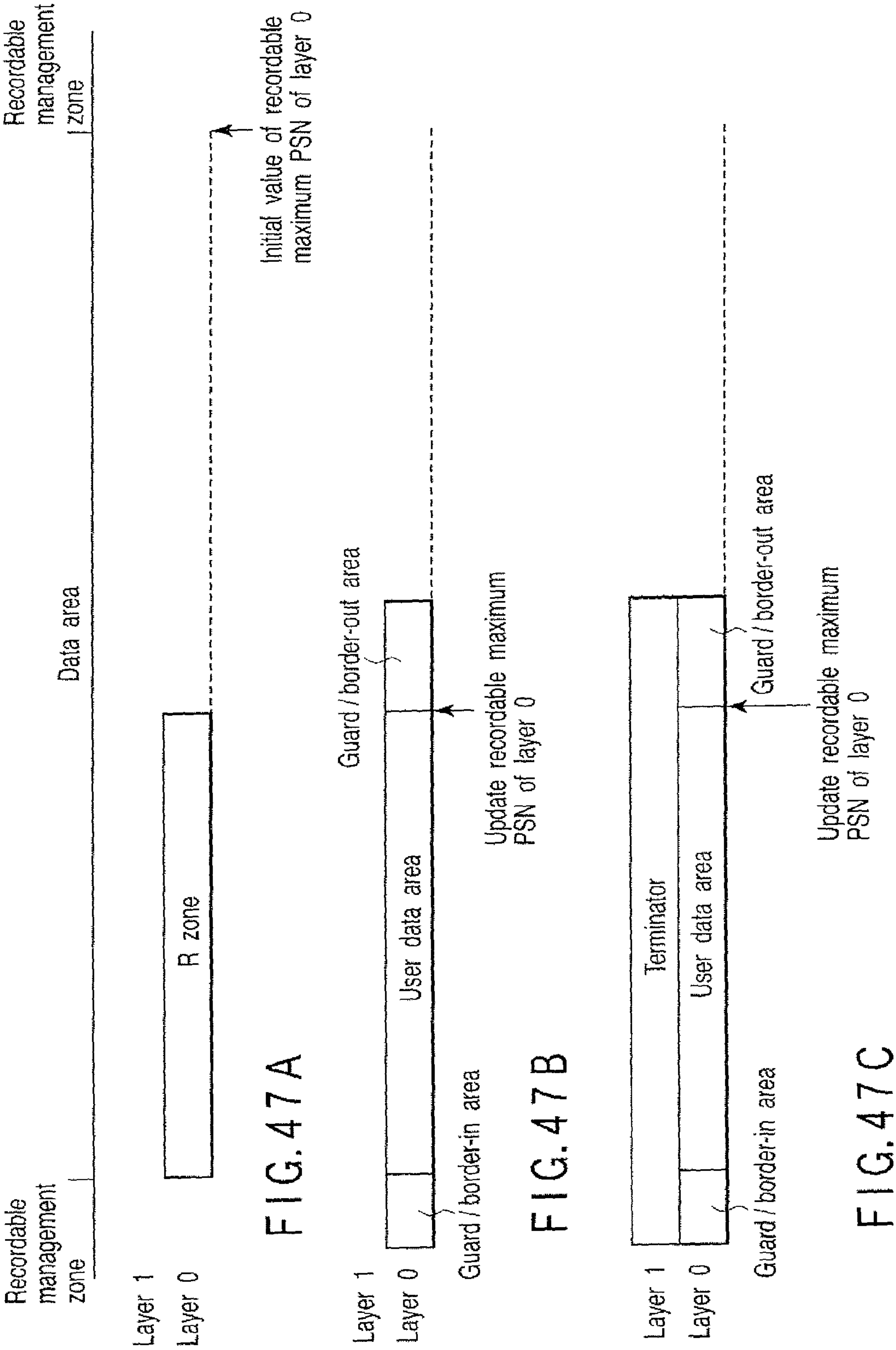


FIG. 47A

FIG. 47B

FIG. 47C

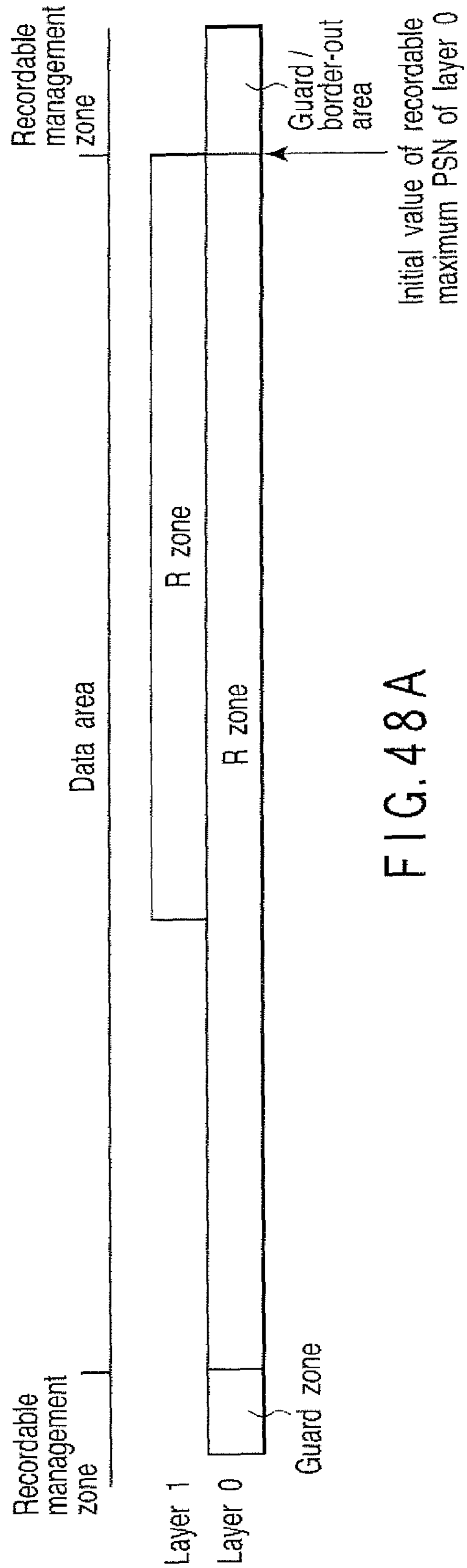


FIG.48A

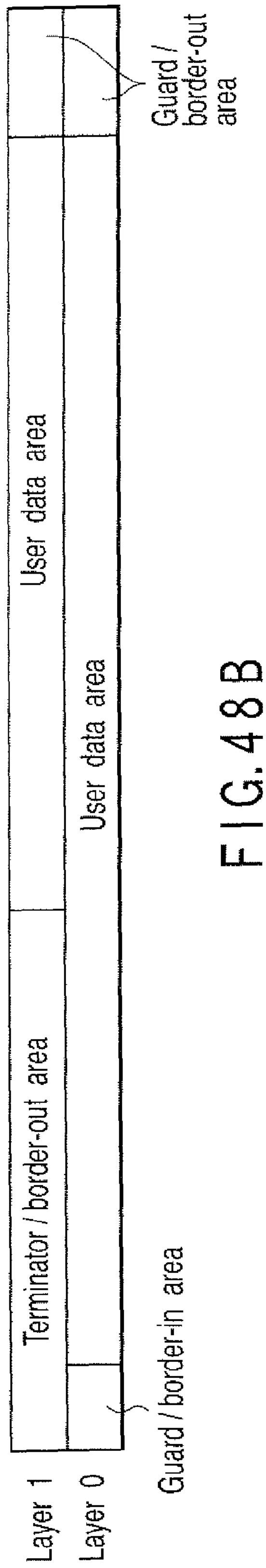


FIG.48B

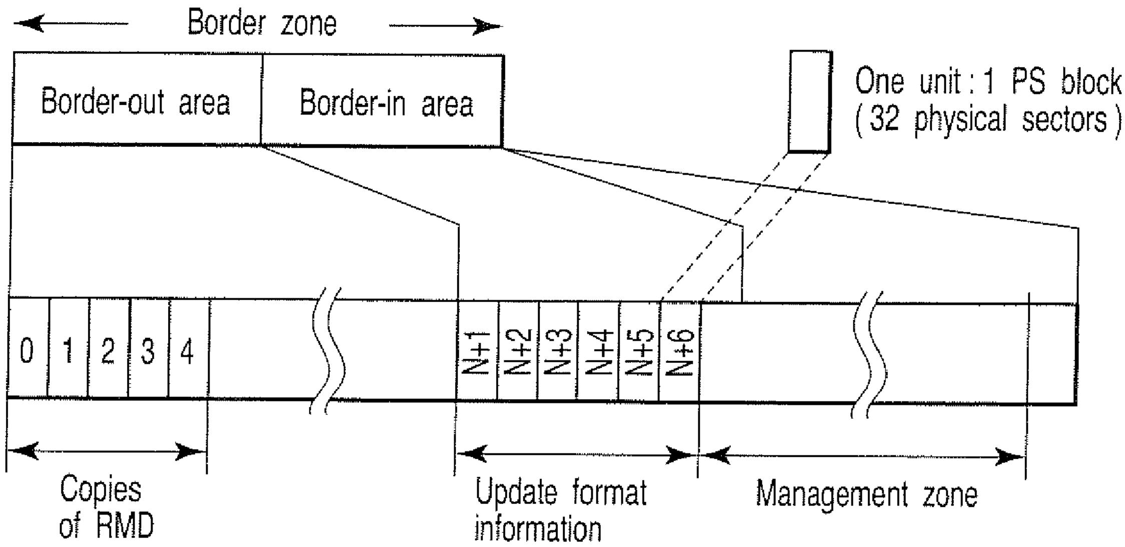
Border zone
Border-out area
Border-in area
One unit : 1 PS block
( 32 physical sectors )
0
1
2
3
4
N+1
N+2
N+3
N+4
N+5
N+6
Copies of RMD
Update format information
Management zone

FIG.49

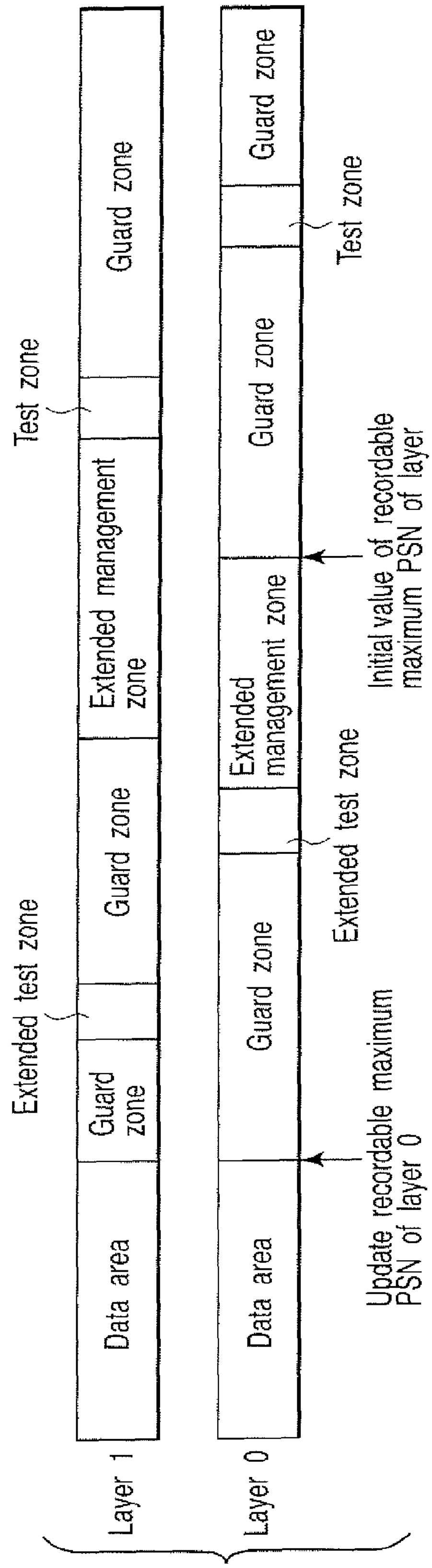
Layer 1
Data area
Guard zone
Extended test zone
Guard zone
Extended management zone
Test zone
Guard zone
Layer 0
Data area
Guard zone
Update recordable maximum PSN of layer 0
Extended test zone
Extended management zone
Initial value of recordable maximum PSN of layer
Guard zone
Test zone
Guard zone

FIG.50

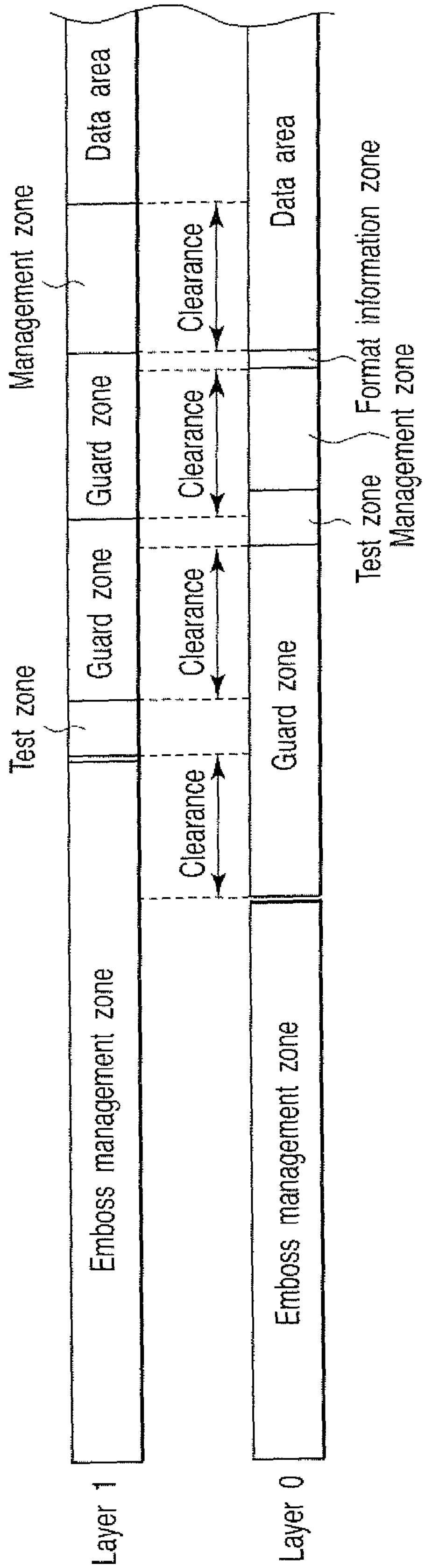
Layer 1
Emboss management zone
Test zone
Guard zone
Guard zone
Management zone
Data area
Clearance
Clearance
Clearance
Clearance
Layer 0
Emboss management zone
Guard zone
Test zone
Management zone
Management zone
Format information zone
Data area

FIG. 51

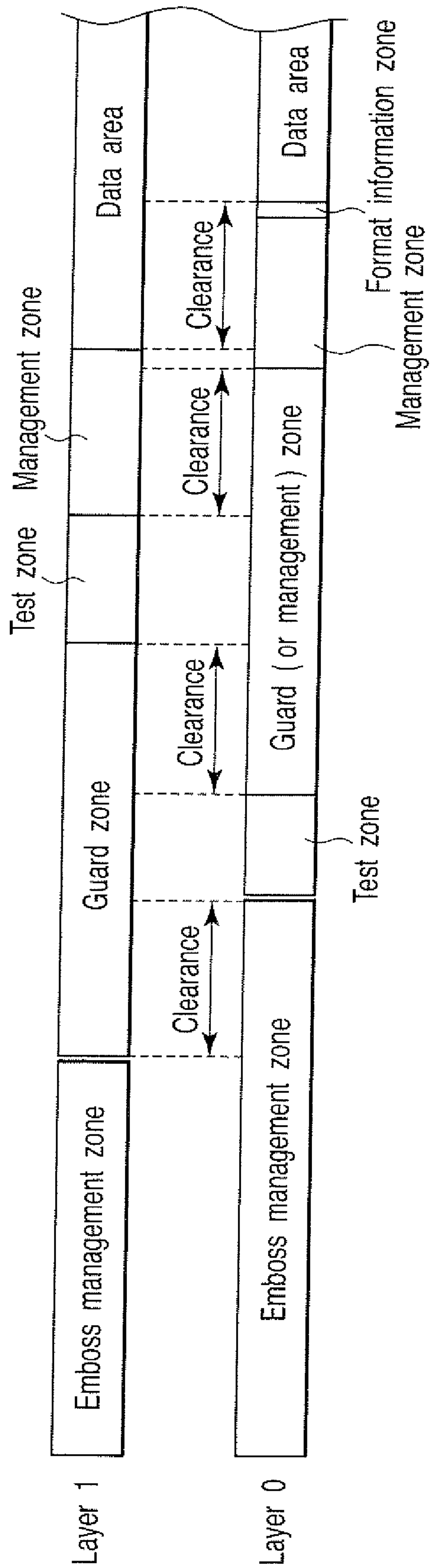
Layer 1
Layer 0
Emboss management zone
Emboss management zone
Guard zone
Test zone
Management zone
Data area
Clearance
Clearance
Clearance
Clearance
Test zone
Guard ( or management ) zone
Management zone
Format information zone
Data area

FIG. 52

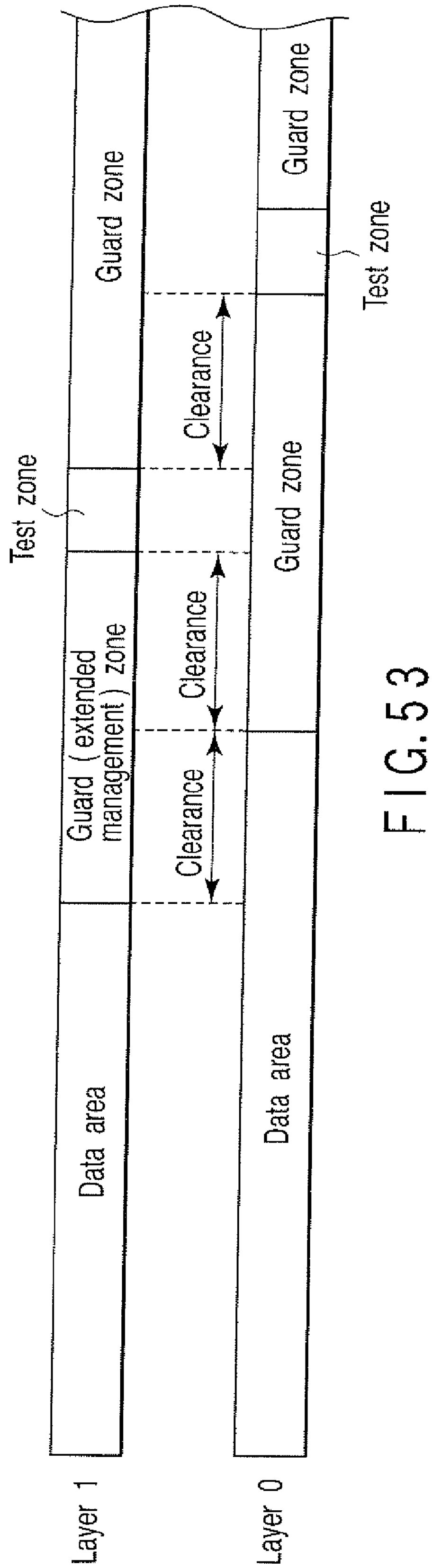
Guard zone
Test zone
Clearance
Guard zone
Test zone
Clearance
Guard (extended management) zone
Clearance
Data area
Data area
Layer 1
Layer 0

FIG. 53

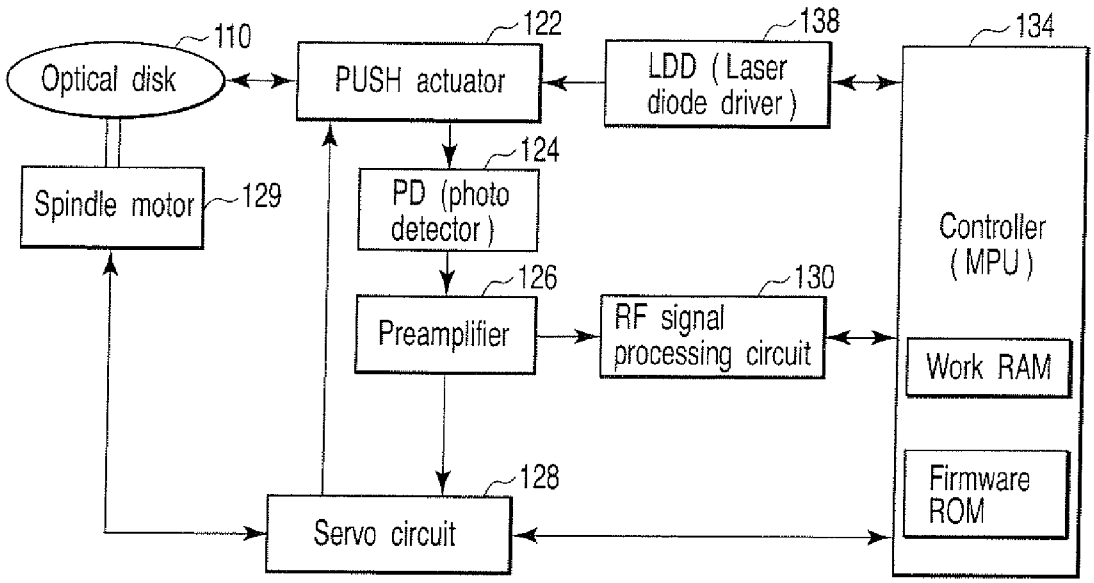


FIG.54

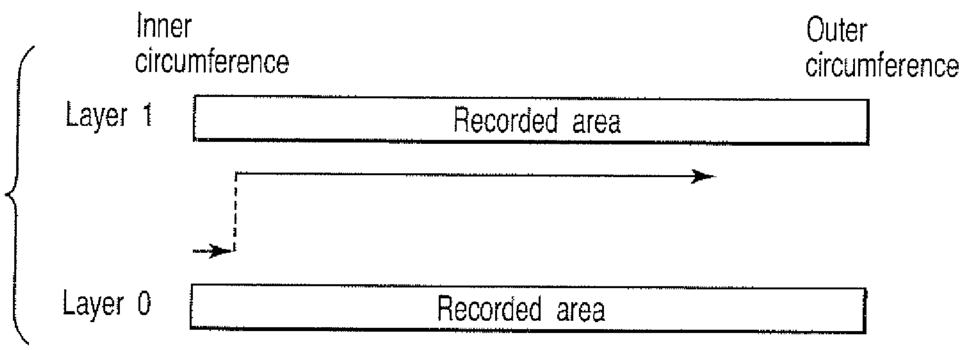


FIG.55A

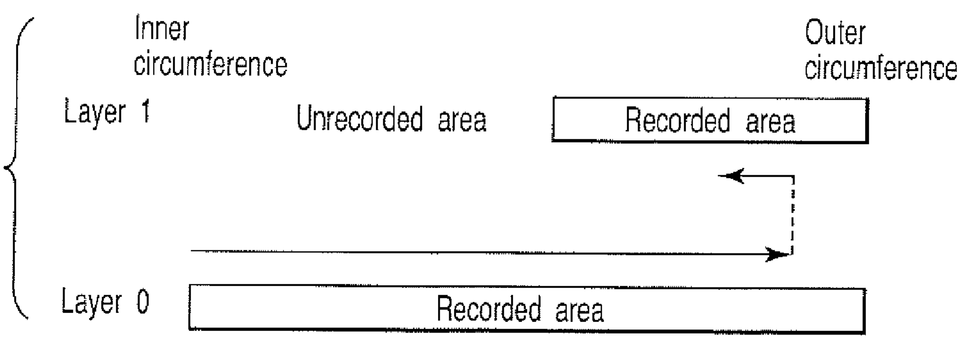


FIG.55B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004206849 A